(19) Europäisches Patentamt
European Patent Office
Office européen des brevets

(11) **EP 2 713 195 B1**

(12) **EUROPEAN PATENT SPECIFICATION**

(45) Date of publication and mention
of the grant of the patent:
**12.04.2017 Bulletin 2017/15**

(51) Int Cl.:
**G02B 21/00** *(2006.01)*    **G02B 21/36** *(2006.01)*
**G02B 27/58** *(2006.01)*    **G02B 21/16** *(2006.01)*

(21) Application number: **12006780.6**

(22) Date of filing: **28.09.2012**

(54) **High resolution microscopy by means of structured illumination at large working distances**

Hochauflösende Mikroskopie mittels strukturierter Beleuchtung bei großen Arbeitsdistanzen

Microscopie à haute résolution au moyen de l'éclairage structuré sur de grandes distances de travail

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**02.04.2014 Bulletin 2014/14**

(73) Proprietors:
• **Universität Heidelberg**
  **69117 Heidelberg (DE)**
• **Friedrich-Schiller-Universität Jena**
  **07743 Jena (DE)**

(72) Inventors:
• **Cremer, Christoph**
  **69126 Heidelberg (DE)**
• **Best, Gerrit**
  **69115 Heidelberg (DE)**
• **Amberger, Roman**
  **83435 Bad Reichenhall (DE)**
• **Heintzmann, Rainer**
  **07743 Jena (DE)**

(74) Representative: **Müller-Boré & Partner
Patentanwälte PartG mbB
Friedenheimer Brücke 21
80639 München (DE)**

(56) References cited:
**EP-A1- 1 992 276        WO-A1-2008/124832
WO-A1-2012/059564**

• **R. HEINTZMANN ET AL: "Axial tomographic
confocal fluorescence microscopy", JOURNAL
OF MICROSCOPY, vol. 206, no. 1, 1 April 2002
(2002-04-01), pages 7-23, XP055052240, ISSN:
0022-2720, DOI:
10.1046/j.1365-2818.2002.01000.x**

**Description**

The present invention relates to high resolution microscopy with a large working distance.

In particular, the present invention relates to a method, an apparatus (a large distance microscope), a computer implemented method and a computer program product for producing high resolution images of a specimen using fluorescence and/or reflection illumination observations.

The ability of a microscope to distinguishably image structures of small objects is characterized, besides by the contrast, by the resolving power or resolution of the microscope. Due to the diffraction, point objects are seen as blurred disks (called Airy disks) surrounded by diffraction rings. The function describing this blurring is referred to as Point-Spread-Function or shortly PSF. The resolution of a microscope can be defined as the ability to distinguish between two closely spaced Airy disks. In other words, the resolution of a microscope can be defined as the ability to reveal adjacent structural details as distinct and separate. The diffraction limits this ability and thus the resolution. The extent and magnitude of the diffraction patterns are affected by both the wavelength of light $\lambda$ and the numerical aperture (NA) of the objective lens. Thus, there is a finite limit beyond which it is impossible to resolve separate points in the object field, known as the diffraction limit or Abbe limit. Assuming that optical aberrations in the whole optical set-up are negligible, the resolution d_min, i.e. the minimal detectable distance between two point-like objects, can be stated as:

$$d\_min = \lambda/(2 \times NA).$$

Thus, in the lateral direction, i.e. a direction perpendicular to the optical path, the resolution of a conventional optical imaging system depends linearly on the numerical aperture NA. It can be further shown that in the axial direction, i.e. the direction along the optical path, the resolution depends quadratically on the numerical aperture NA. In general, the numerical aperture is a quantity which describes the ability of an optical element to focus light. In case of objectives, the numerical aperture determines the minimal size of the light spot producible in the focus of the objective. The numerical aperture NA of a conventional high performance fluorescent microscope is typically in the range of 1.2 to 1.4. Assuming a wavelength of 550 nm, which corresponds to green light, and a numerical aperture NA = 1.4, the lowest value of d_min obtainable with conventional lenses is about 200 nm in the lateral direction and about 700 nm in the axial direction.

Although the Abbe limit is a universal principle that cannot be broken directly, multiple techniques, including fluorescence microscopy techniques, for surpassing the resolution limit have been proposed. Contrary to normal transilluminated light microscopy, in fluorescence microscopy the observed specimen is illuminated through an objective lens with a narrow set of wavelengths of light. This light interacts with fluorophores in the specimen which then emit light of a different wavelength, thereby forming an image of the observed specimen. The publications of R. Heintzmann et al., "Laterally modulated excitation microscopy: Improvement of resolution by using a diffraction grating", published in proceedings of SPIE (1999), 3568, 185, and G. Best et al., "Structured illumination microscopy of autofluorescent aggregations in human tissue", published in Micron (2010), disclose structured illumination microscopy (SMI) methods being able to code high resolution information into the low resolution supported region of the microscope and thus circumvent the Abbe limit. The required conditions are generated in SMI by illuminating the object with a periodic pattern and observing fluorescent light emitted by the illuminated object.

If the size of the detection objective is limited, a large numerical aperture NA inevitably results in a small working distance (WD), i.e. a small distance between the observed specimen and the first optical element of the microscope next to the specimen. This is because the numerical aperture strongly depends on the maximal possible angle under which light emitted by an object or specimen can be detected. For example, the working distance of a typical objective with NA = 1.4 (i.e. a high-NA lens) is only several hundred micrometers. Due to the small working distance, the variety of specimens that can be investigated by a microscope using a high-NA lens is significantly limited. Moreover, physical access for probes and other instruments may be difficult or even impossible.

On the other hand, many applications and/or investigations, e.g. in the field of contactless diagnostics, require much larger working distances, preferably in the range of several millimetres to several centimetres. For said optical applications, the numerical aperture is low (typically in the range of 0.1 to 0.5) resulting in a significantly reduced lateral (in the object plane) and axial resolution compared to conventional high performance microscopy. For example, with a numerical aperture of NA = 0.1, only a lateral resolution of typically 2 to 3 $\mu$m and an axial resolution of typically 100 $\mu$m can be achieved. Due to this relatively small resolution, the information content of the resulting images is significantly reduced. Another drawback of conventional imaging systems that is usually associated with a large working distance is the long distance which the light has to cover from the objective to the specimen and from the specimen back to the objective. Usually, for applications requiring large working distances, the beam passes optical disturbing media (such as immersion media, coverslip, embedding media in case of conventional microscopy) resulting in auto-fluorescence, scattering and/or diffraction of light, which degrades the image.

In view of the above, conventional optical imaging systems which are characterized by a large working distance (e.g. several millimetres or centimetres) and thus a low numerical aperture (e.g. between 0.1 and 0.5) suffer from a small lateral and particularly a small axial resolution in connection with a strong background outside the focus plane, which degrades the contrast of the images.

Different approaches are currently applied to overcome some of the above mentioned drawbacks:

Confocal microscopy:

Confocal microscopy uses point illumination and a pinhole in an optically conjugate plane in front of the detector to eliminate out-of-focus light. The detected region is limited to a small, diffraction-limited region of the specimen. Since only light produced by fluorescence very close to the focal plane is detected, the optical resolution and contrast are improved compared to a conventional wide-field fluorescence microscope where the entire specimen or major portions thereof is evenly illuminated. However, since much of the fluorescent light emitted from the specimen is blocked at the pinhole, the increased resolution is at the cost of decreased signal intensity. In order to compensate for the associated low signal-to-noise ratio, the illumination intensity has to be increased. Moreover, in order to obtain an image, the specimen has to be scanned point-by-point over an elected region. Consequently, the optical arrangement of a confocal microscope is relatively complex.

Light-sheet microscopy:

Another approach to reduce disturbing signals from outside the focus plane is known as light-sheet microscopy. By employing an illumination source which is arranged perpendicular to the detection objective of the microscope the three dimensional fluorescence excitation can be limited to the focus area. This arrangement suffers in particular from the following drawbacks: Firstly the geometry is relatively complex and secondly these systems cannot be used for many important applications (e.g. ophthalmoscopy or other kinds of tissue diagnostics which are carried out directly on the patient), because the area required for the orthogonal illumination apparatus may be not available.

Two-photon excitation microscopy:

A third variant, the two-photon excitation microscopy, exploits the two-photon effect in order to reject out-of-focus fluorescence and achieve a localized excitation. The concept of the two-photon microscopy is based on a fluorescence excitation which requires the energy of two photons, i.e., fluorescence excitation only occurs when two photons are absorbed. In such a system, the intensity of fluorescent light emitted by the specimen depends quadratically on the intensity of the excitation light. Therefore, much more two-photon fluorescence is generated where the illumination beam is tightly focused than where it is more diffuse. Accordingly, excitation is restricted to a small focal volume, resulting in an effective rejection of out-of-focus objects. The observed specimen is scanned by the focused excitation light. Usually, also the detection is realized in focus resulting in a confocal microscopy method with a two-photon excitation. Since the probability of the near-simultaneous absorption of two photons is extremely low, high energy densities of the excitation light (laser power and focusing) are required. Hence, an expensive laser system and a relatively complex arrangement are some of the drawbacks of the two-photon technique.

The prior art microscopes, as described above, are not suitable for many applications, since they require high illumination intensity and/or complex and expensive optical arrangements.

WO 2008/124832 A1 discloses a system and method for imaging an object. The method comprises the steps of applying a structured periodic illumination to the object a plurality of times with a plurality of phase shifts in the structured illumination, taking a plurality of images of the object corresponding to the plurality of phase shifts, estimating the plurality of phase shifts by determining a phase of a peak of a Fourier transform of each of the taken images, and reconstructing an image of the object using the plurality of images and the plurality of estimated phase shifts.

It is thus an object of the present invention to provide an improved method, apparatus and a computer program product for obtaining high resolution images of a specimen using fluorescence and/or reflection illumination observation, in particular fluorescence and/or reflection illumination observation with a large working distance. This object is solved according to the invention by the features of the independent claims. Preferred embodiments of the invention are subject of the dependent claims.

According to an aspect of the invention, there is provided a method for obtaining a sub-resolution image of a specimen using a microscope (for example a fluorescence microscope), the method comprising:

projecting an illumination pattern of illumination light onto the specimen, thereby illuminating the specimen; detecting at least a portion of fluorescent light emitted from the specimen and/or detecting at least a portion of illumination light reflected from the specimen, thereby capturing a series of images of the specimen at a plurality of different relative positions of the specimen with respect to the illumination pattern projected onto the specimen, wherein between the capturing of at least two images of the series the relative position of the specimen with respect to the illumination pattern projected onto the specimen is stochastically shifted;

processing the captured images to extract a sub-resolution image of the specimen, wherein the processing the captured images comprises:

applying an analytic deconvolution of each of a second and subsequent images of the series by a first image of the series to obtain a corresponding deconvolved image;

determining the position of a maximum of the analytic deconvolution of each of the deconvolved images;

determining the stochastic shift of the relative position of the specimen with respect to the illumination pattern projected onto the specimen for each of the second and subsequent images of the series from the determined position of the maximum of the analytic deconvolution;

a-posteriori shifting of each image of the series to reverse the determined shift of the relative position of the specimen with respect to the projected illumination pattern, thereby obtaining a corresponding shifted image; and

processing the shifted images to extract the sub-resolution image of the specimen.

According to another aspect, there is provided a large distance microscope for fluorescence and/or reflection illumination observations of a specimen, the microscope comprising:

a light source which emits illumination light;

a pattern generation system arranged in the optical path of the illumination light, said pattern generation system configured to generate an illumination pattern of the illumination light;

an objective arranged and configured to illuminate the specimen by projecting the illumination pattern onto the specimen;

an image capturing system configured to detect at least a portion of fluorescent light emitted from the specimen and/or to detect at least a portion of illumination light reflected from the specimen, thereby capturing a series of images of the specimen at a plurality of different relative positions of the specimen with respect to the illumination pattern projected onto the specimen, wherein between the capturing of at least two images of the series there is a stochastic shift of the relative position of the specimen with respect to the illumination pattern projected onto the specimen;

a data processing system configured to process the series of captured images by performing the following steps:

applying an analytic deconvolution of each of a second and subsequent images of the series by a first image of the series to obtain a corresponding deconvolved image;

determining the position of a maximum of the analytic deconvolution of each of the deconvolved images;

determining the stochastic shift of the relative position of the specimen with respect to the illumination pattern projected onto the specimen for each of the second and subsequent images of the series from the determined position of the maximum of the analytic deconvolution;

a-posteriori shifting of each image of the series to reverse the determined shift of the relative position of the specimen with respect to the projected illumination pattern, thereby obtaining a corresponding shifted image; and

processing the shifted images to extract a sub-resolution image of the specimen.

According to yet another aspect, there is provided a computer implemented method for generating sub-resolution images of a specimen based on a series of images of the specimen obtained by a microscope, wherein

said series of images is obtained by

projecting an illumination pattern of illumination light onto the specimen, thereby illuminating the specimen, and detecting at least a portion of fluorescent light emitted from the specimen and/or detecting at least a portion of illumination light reflected from the specimen, thereby capturing a series of images at a plurality of different relative positions of the specimen with respect to the illumination pattern projected onto the specimen, wherein between the capturing of at least two images of the series the relative position of the specimen with respect to the illumination pattern projected onto the specimen is stochastically shifted; and wherein

said method comprises the steps of

receiving said series of images of the specimen;

applying an analytic deconvolution of each of a second and subsequent images of the series by a first image of the series to obtain a corresponding deconvolved image;

determining the position of a maximum of the analytic deconvolution of each of the deconvolved images;

determining the stochastic shift of the relative position of the specimen with respect to the illumination pattern projected onto the specimen for each of the second and subsequent images of the series from the determined position of the maximum of the analytic deconvolution;

a-posteriori shifting of each received image to reverse the corresponding stochastic shift of the relative position of the specimen with respect to the projected illumination pattern, thereby obtaining a corresponding shifted image; and processing the shifted images to extract a sub-resolution image.

The method for obtaining a sub-resolution image, the large distance microscope and the computer program product according to an aspect of the invention offer one or more of the following advantages:

For a given numerical aperture the optical resolution of the large distance microscope according to an aspect of the invention can be improved by a factor of 2 or more compared to conventional microscopes. Therefore, it is possible to use large distance objectives with low numerical apertures NA (e.g. NA in the range of 0.1 to 0.5) in order to obtain working distances of up to several centimetres. Despite such low numerical apertures and large working distances, a resolution in the range of few micrometers and a contrast comparable to the best available confocal laser scanning microscopes (CLSM) can be achieved. Further, in contrast to known structured illumination methods for resolution enhancement, intrinsic or extrinsic periodic or non-periodic movements of the specimen (particularly for in-vivo measurements) can be exploited to improve the resolution and contrast of the obtained images. Thus for example, for ophthalmological applications, micro-saccades of the eye can be exploited to obtain an improved imaging. In particular, the quasi-stochastic micro saccades of the eye (jerky eye movements in the range of about 3 to 50 angular minutes) during a high resolution observation of the eye fundus (eyeground) result in a considerable lateral shifting of the illumination pattern with respect to the observed eye region. Similarly, in endoscopic observations the involuntary movements of the observed specimen may be exploited to obtain improved imaging. Such non-controlled involuntary (for example stochastic) movements of the observed specimen have so far been regarded as detrimental to the accuracy and reliability of microscopic observations.

The combination of high optical resolution and large working distances is of high importance for many biological and medical applications or any other (non-biological) application requiring a large working distance. The proposed large distance microscope and a method for obtaining a sub-resolution image of a specimen using a fluorescence microscope are for example particularly suitable for in vivo imaging.

Moreover, according to an aspect of the present invention, the specimen is subjected to a wide-field illumination. Thus, it is not necessary to subject the specimen to light with high illumination intensity and/or energy densities which might degrade or damage the specimen. Further, disturbing influences of auto-fluorescence, scattering and diffraction in regions outside the focus plane can be reduced.

Another advantage of the large distance microscope according to an aspect of the invention may be that low-cost pattern generation devices (for example micro liquid crystal displays) can be used for structuring the light (e.g. excitation light) illuminating the observed specimen. Accordingly, a large distance microscope with a less costly, less critical and more stable optical setup as compared to prior art solutions may be realized.

A still further advantage may be the reduction in the requirements for the stability of the optical set up of the microscope and in particular the requirements for stability of the illumination during the acquisition of the series of images of the observed specimen. This simplifies the optical set up of the microscope, while improving its resolution.

The use of the structured or patterned illumination may further reduce the influence of disturbing effects due to auto-fluorescence, diffraction and scattering outside the object plane, thereby obtaining a significant improvement of resolution and contrast.

In view of the above advantages, the method for obtaining a sub-resolution image of a specimen using a fluorescence and/or reflection microscope and the large distance microscope may be useful for many applications, for example in the field of contactless diagnostics, particularly in dermatology, dentistry, tissue diagnostics, endoscopy, developmental biology, embryology, the investigation of model organisms (zebrafish, Drosophila larva), neurobiology, animal models, and/or ophthalmology.

In addition, the method for obtaining a sub-resolution image of a specimen using a fluorescence and/or reflection microscope and the large distance microscope may be efficiently combined with other microscopic techniques, for example with localization microscopy and/or fluorescence tomography. Further, it is also possible to apply wavefront compensation by means of adaptive optics. Thereby, an additional improvement of the imaging may be achieved particularly in the cases that lens aberrations or inhomogeneous refractive indices in the specimen are present.

The above and other objects, features and advantages of the present invention will become more apparent upon reading of the following detailed description of preferred embodiments and accompanying drawings. Other features and advantages of the subject-matter described herein will be apparent from the description and the drawings and from the claims. It should be understood that even though embodiments are separately described, single features and functionalities thereof may be combined without prejudice to additional embodiments.

Preferred embodiments of the present invention are exemplarily described regarding the following figures.

**Fig. 1A** shows a schematic representation of an optical arrangement of a large distance microscope according to one example.

**Fig. 1 B** shows a schematic representation of an optical arrangement of a large distance microscope according to another example.

**Fig. 2** shows a photograph of an optical arrangement of a large distance microscope according to one example.

**Fig. 3** shows two exemplary images of a portion of an eye retina, wherein Fig. 3a shows an image obtained by a conventional microscope and Fig. 3b shows an image obtained by a structured illumination microscope (SMI).

**Fig. 4** is a schematic view of a saccade detection device which works with reflected light.

**Fig. 5** is a schematic representation of an optical arrangement of an ophthalmoscope as an example of a LDN according to the present invention.

**Fig. 6** is a schematic illustration of the determination of the non-controlled (e.g. stochastic/random) shift of the relative position of the specimen (e.g. an eye) with respect to the illumination pattern projected onto the specimen.

Throughout the figures, same reference signs are used for the same or similar elements.

According to an example, there is provided a method for obtaining sub-resolution images of a specimen using a microscope. The method comprises

projecting an illumination pattern of illumination light onto the specimen, thereby illuminating the specimen;
detecting at least a portion of fluorescent light emitted from the specimen and/or detecting at least a portion of illumination light reflected from the specimen, thereby capturing a series of (raw) images of the specimen at a plurality of different relative positions of the specimen with respect to the illumination pattern projected onto the specimen, wherein between the capturing of at least two images of the series (e.g. between the capturing of each two consecutive images of the series) the relative position of the specimen with respect to the illumination pattern projected onto the specimen is shifted or varied in a non-controlled manner;
processing the captured images to extract a sub-resolution image of the specimen.

The microscope employed by the method is preferably a large distance microscope (also referred to hereinafter as a long/large distance nanoscope or LDN) in which the working distance, i.e. the distance between the microscope objective and the observed specimen is larger than 1 mm, preferably larger than 1 cm and most preferably larger than 10 cm. The working distance of the fluorescent microscope within the scope of the present application may be in particular in the range of 1 mm to 15 cm. The large distance microscope may in particular be utilized as an ophthalmoscope or endoscope for performing high resolution observations.

The term "sub-resolution" (also called "super-resolution") within the scope of this application encompasses a resolution which is better than the conventional diffraction limited resolution, i.e. better than the resolution given by the Abbe limit. A microscope having "sub-resolution" may thus be able to distinguish structures that are not expected to be distinguishable according to the Abbe limit. In other words, a sub-resolution image is an image with an enhanced optical resolution compared with conventional microscopes according to the state of the art applied at the same illumination wavelength and with the same numerical aperture of the objective lens used for imaging.

The term "fluorescence" within the scope of this application encompasses any photon interactions, in which differences arise between the excitation spectrum and the emission spectrum of the same substance, which are not attributable to monochromatic absorption or dispersion. The term "fluorescence" may include in particular multiphoton interactions, in which the excitation wavelength can be greater than the emission wavelength. The term "fluorescence" encompasses thus the closely related phenomena of fluorescence, phosphorescence and luminescence, which differ in particular in the fluorescence lifetime.

The expression "a series of (raw) images" within the scope of this application encompasses a plurality of (raw) images, preferably at least three images. In one example, the captured series of (raw) images may contain a plurality of images wherein between the capturing of at least two (e.g. each two consecutive) images of the series the relative position of the specimen with respect to the illumination pattern projected onto the specimen may be shifted or varied in a non-controlled manner.

In the following, the images captured by illuminating the specimen by an illumination pattern and detecting at least a portion of the fluorescent light emitted from the specimen and/or detecting at least a portion of illumination light reflected from the specimen will be also referred to as "raw" images, in order to better distinguish them from the "sub-resolution" images obtained by processing the captured "raw" images. This does not exclude the possibility of subjecting the images detected by the detector to suitable image pre-processing operations, such as noise filtering, in order to improve their image quality. The term "raw images" also encompasses such preprocessed images.

The non-invasive observations may comprise non-invasive fluorescence observations and/or non-invasive reflection observations.

In case of non-invasive fluorescence observations, the illumination light encompasses excitation light to excite fluorescent material (e.g. fluorochromes or fluorescent labels or markers). The specimen, also referred to as a sample or an object, may contain a plurality of fluorochromes, i.e. chemical compounds that can re-emit light upon light excitation. For example, the specimen may be labeled by one or more fluorescent labels or dyes (e.g. fluorescein or other suitable fluorescent labels). For example, the FISH labeling scheme or any other suitable labeling scheme may be employed. The specimen may be placed, respectively mounted on or in a coverslip or may be placed in a suitable culture container (for example a Petri dish). In addition or as an alternative the specimen itself may comprise natural autofluorescent substances. The fluorescence light emitted from these fluorescent substances may be detected, thereby forming an image of the observed retinal region.

In case of non-invasive reflection observations, the illumination light may be reflected from the specimen. At least a portion of the reflected light may be detected, thereby forming an image of the observed specimen.

The specimen is illuminated by projecting an illumination pattern of illumination (e.g. excitation) light onto it. More specifically, the illumination pattern of illumination light is projected into the object plane where the specimen is located. The object plane may be a plane perpendicular to the optical axis of the microscope and more specifically to the optical axis of the (at least one) microscope objective. The illumination pattern of illumination light may comprise illumination light which is periodically or non-periodically spatially modulated in its intensity and/or phase. The illumination pattern of illumination light may be a suitably spatially structured or patterned illumination light, in particular an illumination light, which is suitably spatially structured or modulated in the object plane. An example of such spatially modulated illumination pattern is a fringe pattern or a combination of more than one fringe patterns.

The illumination pattern of illumination light may be generated by various means, for example by a diffraction grating, a spatial light modulator, an interferometer or other suitable means. In an example, the illumination pattern may be generated by conducting an illumination light emitted from a light source through an intensity modulating light transmitting spatial light modulator arranged in the optical path of the illumination light (i.e. in the illumination arm or path of the microscope). The intensity modulating light transmitting spatial light modulator may be constituted by or comprise a micro liquid crystal display (micro-LCD), such as for example used in mass produced light projectors. The micro-LCD may display a pattern structure in an image plane perpendicular to the beam path (i.e. perpendicular to the direction of propagation of the illumination light). Thus, illumination light transmitted through the micro-LCD may be spatially modulated by the displayed pattern or structure in the image plane. The modulated, i.e. structured or patterned illumination light may then be focused into the object plane. In other words, the pattern or structure displayed in the image plane may be projected onto the specimen located in the object plane.

Upon illuminating the specimen, fluorescent light may be emitted and/or illumination light may be reflected from the specimen, wherein at least a portion of said fluorescent light and/or reflected light is detected. The detection of the fluorescent light and/or reflected light may be carried out by means of an imaging system, also referred to as an image capturing system, which may comprise a CCD camera. By detecting the fluorescent light and/or reflected light of the specimen (and optionally pre-processing the detected images, for example to improve the image quality), a raw image of the specimen is acquired or captured by the imaging system. This procedure may be repeated so that a plurality or a series of (raw) images is captured.

The relative position of the specimen with respect to the illumination pattern projected onto the specimen is varied or shifted in a non-controlled manner (i.e. in a manner that is not perfectly controllable or in other words not perfectly deterministic). The expression "in a non-controlled manner" within the scope of the present invention also encompasses the expressions "in an undetermined manner", "non-deterministically" or "involuntarily". An example of a non-controlled shift or variation may be a "quasi linear" shift or variation. Another example is a quasi-stochastic or stochastic (i.e. pseudo-random or random) shift or variation, for example a quasi-stochastic or stochastic shift or variation in a two dimensional space.

A shift in a non-controlled manner may occur, for example, by a drift of the specimen or by active (involuntary) movements of the specimen (e.g. micro-saccades of an eye, a vibrating machine part, a moving part of the body). A shift in a non-controlled manner may also be realized by using the (intrinsic) instability and impreciseness of one or more optical components of the used illumination and/or image capturing system, i.e. of the used optical setup. Alternatively or in addition, a non-deterministic, non-controlled shift may be obtained by actively varying the relative position of the illumination pattern with respect to the observed region.

Due to the non-controlled shift, the relative position of the specimen with respect to the illumination pattern projected onto it changes between two captured images. Accordingly, a plurality of raw images is captured at a plurality of different (e.g. stochastically varied) relative positions of the specimen with respect to the illumination pattern projected onto the specimen. In particular, three or more (for example up to 100) raw images are captured at three or more different relative positions of the specimen with respect to the illumination pattern projected onto the specimen.

In an example, the relative position of the specimen with respect to the illumination pattern may be shifted or varied in a non-controlled manner by utilizing stochastic movements of the specimen and/or stochastically shifting the specimen, and/or by stochastic stage scanning, and/or by stochastic movements of a focusing lens system of a microscope objective.

Accordingly, the method may further comprise the step of non-deterministically or stochastically shifting or varying the relative position of the specimen with respect to the illumination pattern projected onto the specimen, wherein the non-deterministically or stochastically shifting the relative position of the specimen with respect to the illumination pattern may comprise one or more of stochastically shifting the specimen, stochastic stage scanning and/or stochastic movement of a focusing lens system of a microscope objective.

In an example, the uncontrolled shift or variation of the observed specimen's position with respect to the optical set-up and more specifically with respect to the optical plane of the illumination pattern, the image plane or the (at least one) objective lens may be used to realize the non-controlled shift of the relative position of the specimen with respect to the illumination pattern between at least two images of the series and thus the plurality of different relative positions of the specimen with respect to the illumination pattern at which images are captured. The specimen may be stochastically (randomly) moved in the object plane and/or in a direction along the optical axis of the microscope or more specifically of the (at least one) microscope objective.

As explained above, the non-controlled shift or variation of the specimen with respect to the illumination pattern projected onto it may be achieved by stochastically shifting the specimen. To this end, the specimen may be positioned on a movable stage, driven by an actuator. Alternatively, the inherent non-controlled (stochastic) movement of the specimen itself (such as the saccadic movement of an eye, the movement of a body part, vibrating machine, etc.) may be advantageously used in the method for obtaining a sub-resolution image of a specimen using a microscope. In case of letting the specimen shift, the illumination pattern, i.e. the illumination pattern of illumination light (e.g. excitation light), may be left unchanged, i.e. stable.

Still further alternatively or in addition, the non-controlled (e.g. stochastic) shift or variation may be achieved by non-controllable, non-deterministic movements of the optical set-up, such as a stochastic stage scanning, i.e. a stochastic movement of the illumination pattern. For example if the illumination pattern is produced by a spatial light modulator (such as a micro-LCD), the illumination pattern may be shifted or varied by means of the DVI port of a computer that drives a controller of the spatial light modulator. Alternatively or in addition, the non-controlled (e.g. stochastic) shift or variation of the relative position of the specimen with respect to the illumination pattern may be achieved by a stochastic movement of a focusing lens system of the (at least one) microscope objective.

In order to extract a sub-resolution image of the retinal region of the eye, the captured (raw) images are further processed. The processing of the captured (raw) images comprises

> a-posteriori shifting of each captured (raw) image to reverse the corresponding stochastic shift (variation) of the relative position of the retinal region of the eye with respect to the projected illumination pattern, thereby obtaining shifted images; and
> processing the shifted (raw) images to extract a sub-resolution image of the retinal region of the eye.

The a-posteriori shifting of each captured (raw) image to reverse the corresponding non-controlled (e.g. stochastic) shift of the retinal region of the eye with respect to the projected illumination pattern may comprise

> frequency filtering the captured (raw) images to remove the primary illumination pattern information from the images; and
> iteratively shifting the filtered images.

The amount of the a-posteriori shift of each captured raw image (i.e. the second and each subsequent raw image out of the series of captured raw images) to reverse the non-controlled (stochastic/random) shift of the specimen (e.g. the retinal region of an eye) with respect to the projected illumination pattern may be determined in the following manner:

The periodic illumination pattern $I_{Illu}$ can be written as a sum of sinusoidal functions with different spatial periods $\Delta k_i$ and phases $\varphi_i$:

$$I_{Illu}(x) = \sum_i \cos(x\Delta k_i - \varphi_i) \qquad (1).$$

A primary image (reference image), which may be the first captured image out of a series of captured images at different relative positions of the retinal region of the eye with respect to the projected illumination pattern, is given by

$$Im_0(x) = \left(\rho_0(x) \cdot I_{Illu}(x)\right) * PSF(x) \qquad (2),$$

where $\rho$ is the fluorophore distribution, PSF the point spread function, and where $*$ denotes the convolution operator.

In another image $Im_1$ (for example a second or a subsequent image of the series of captured images), the specimen is shifted by a vector $\Delta x$ with respect to the primary (reference) image. The shift can be expressed by a convolution with the delta distribution:

$$\rho_1(x) = \rho_0(x - \Delta x) = \rho_0(x) * \delta(x - \Delta x) \qquad (3).$$

This gives the second or a subsequent image of the series

$$Im_1(x) = \left([\rho_0(x) * \delta(x - \Delta x)] \cdot I_{Illu}(x)\right) * PSF(x) \qquad (4).$$

A Fourier transform (FT, symbolized by a tilde over the corresponding function) of the above expressions (2) and (4) gives

$$\widetilde{Im}_0(k) = \left(\widetilde{\rho_0}(k) * \widetilde{I_{Illu}}(k)\right) \cdot OTF(k) \qquad (5)$$

and

$$\widetilde{Im}_1(k) = \left(\left[\widetilde{\rho_0}(k) \cdot \frac{1}{(2\pi)^2}\exp(-ik\Delta x)\right] * \widetilde{I_{Illu}}(k)\right) \cdot OTF(k) \qquad (6),$$

where the optical transfer function OTF is the Fourier transform of the point spread function PSF and the Fourier transform of the illumination pattern $\widetilde{I_{Illu}}(k)$ is given by

$$\widetilde{I_{Illu}}(k) = \sum_i \exp(i\,\varphi_i)\,\delta(k - \Delta k_i) + \exp(-i\,\varphi_i)\,\delta(k + \Delta k_i) \qquad (7).$$

Therefore, the Fourier transformed primary image $\widetilde{Im}_0(k)$ and the Fourier transformed second or subsequent image $\widetilde{Im}_1(k)$

$$\widetilde{Im}_0(k) = \left[\sum_i \exp(\mathrm{i}\,\varphi_i)\,\widetilde{\rho_0}(k - \Delta k_i) + \exp(-\mathrm{i}\,\varphi_i)\,\widetilde{\rho_0}(k + \Delta k_i)\right] \cdot OTF(k) \qquad (8)$$

$$\widetilde{Im}_1(k) = \left[\sum_i \exp(\mathrm{i}\,\varphi_i)\,\widetilde{\rho_0}(k - \Delta k_i) \cdot \frac{1}{(2\,\pi)^2}\exp(-i(k - \Delta k_i)\Delta x)\right.$$

$$\left. + \exp(-\mathrm{i}\,\varphi_i)\,\widetilde{\rho_0}(k + \Delta k_i) \cdot \frac{1}{(2\,\pi)^2}\exp(-i(k + \Delta k_i)\Delta x)\right] \cdot OTF(k) \qquad (9).$$

The expression for the Fourier-transformed image $\widetilde{Im}_1(k)$ (e.g. the second or subsequent image) can be reorganized in the following manner:

$$\widetilde{Im}_1(k) = \left[\frac{1}{(2\,\pi)^2}\exp(-ik\Delta x)\sum_i \exp(\mathrm{i}\,\varphi_i)\,\widetilde{\rho_0}(k - \Delta k_i) \cdot \exp(i\Delta k_i\Delta x)\right.$$

$$\left. + \exp(-\mathrm{i}\,\varphi_i)\,\widetilde{\rho_0}(k + \Delta k_i) \cdot \exp(-i\Delta k_i\Delta x)\right] \cdot OTF(k) \qquad (10)$$

with the identities

$$\exp(i\Delta k_i\Delta x) = \cos(i\Delta k_i\Delta x) + i\,\sin(i\Delta k_i\Delta x) \qquad (11)$$

and

$$\exp(-i\Delta k_i\Delta x) = \cos(i\Delta k_i\Delta x) - i\,\sin(i\Delta k_i\Delta x) \qquad (12).$$

The Fourier transform of the image $\widetilde{Im}_1(k)$ (e.g. the second or subsequent image) then becomes:

$$\widetilde{Im}_1(k) = \left[\frac{1}{(2\,\pi)^2}\exp(-ik\Delta x)\sum_i \cos(i\Delta k_i\Delta x)\left(\exp(\mathrm{i}\,\varphi_i)\,\widetilde{\rho_0}(k - \Delta k_i)\right.\right.$$

$$\left. + \exp(-\mathrm{i}\,\varphi_i)\,\widetilde{\rho_0}(k + \Delta k_i)\right)$$

$$\left. + i\,\sin(i\Delta k_i\Delta x)\left(\exp(\mathrm{i}\,\varphi_i)\,\widetilde{\rho_0}(k - \Delta k_i) - \exp(-\mathrm{i}\,\varphi_i)\,\widetilde{\rho_0}(k + \Delta k_i)\right)\right]$$

$$\cdot OTF(k)$$

$$(13).$$

Apparently, the first term of the sum becomes

$$\widetilde{Im}_0(\boldsymbol{k}) \cdot \sum_i \cos(i\Delta\boldsymbol{k}_i\Delta\boldsymbol{x}) \qquad (14).$$

The non-controlled (for example stochastic/random) shift vector $\Delta\boldsymbol{x}$ can be obtained by applying an analytic deconvolution of $Im_1(\boldsymbol{x})$ by $Im_0(\boldsymbol{x})$ in the form of

$$R(\boldsymbol{x}) = iFT\left(\frac{FT\big(Im_1(\boldsymbol{x})\big)}{FT\big(Im_0(\boldsymbol{x})\big)}\right) = iFT\left(\frac{\widetilde{Im}_1(\boldsymbol{k})}{\widetilde{Im}_0(\boldsymbol{k})}\right) \qquad (15),$$

wherein $iFT$ denotes the inverse Fourier transform.

The division of the Fourier-transformed second or subsequent image by the primary image $\dfrac{\widetilde{Im_1}(\boldsymbol{k})}{\widetilde{Im_0}(\boldsymbol{k})}$ may be carried out pixel by pixel. Hence, the analytic deconvolution $R(\boldsymbol{x})$ becomes

$$R(\boldsymbol{x})$$

$$= iFT\left[\frac{1}{(2\,\pi)^2}\exp(-ik\Delta x)\cdot\sum_i \cos(i\Delta\boldsymbol{k}_i\Delta\boldsymbol{x})\right.$$

$$\left. +\frac{\sum_i i \sin(i\Delta\boldsymbol{k}_i\Delta\boldsymbol{x})\big(\exp(\mathrm{i}\,\varphi_i)\,\widetilde{\rho_0}(\boldsymbol{k}-\Delta\boldsymbol{k}_i)-\exp(-\mathrm{i}\,\varphi_i)\,\widetilde{\rho_0}(\boldsymbol{k}+\Delta\boldsymbol{k}_i)\big)}{\sum_i \exp(\mathrm{i}\,\varphi_i)\,\widetilde{\rho_0}(\boldsymbol{k}-\Delta\boldsymbol{k}_i)+\exp(-\mathrm{i}\,\varphi_i)\,\widetilde{\rho_0}(\boldsymbol{k}+\Delta\boldsymbol{k}_i)}\right] \quad (16).$$

The second term depends on $\rho_0(\boldsymbol{x})$. It is called $\widetilde{pert1}(\boldsymbol{k})$ in the following.

When performing the inverse Fourier transformation $iFT$, $R(\boldsymbol{x})$ becomes

$$R(\boldsymbol{x})$$

$$= \delta(\boldsymbol{x}-\Delta\boldsymbol{x})\cdot\sum_i \cos(i\Delta\boldsymbol{k}_i\Delta\boldsymbol{x}) \;+\; \delta(\boldsymbol{x}-\Delta\boldsymbol{x})$$

$$* iFT\left[\frac{\sum_i i \sin(i\Delta\boldsymbol{k}_i\Delta\boldsymbol{x})\big(\exp(\mathrm{i}\,\varphi_i)\,\widetilde{\rho_0}(\boldsymbol{k}-\Delta\boldsymbol{k}_i)-\exp(-\mathrm{i}\,\varphi_i)\,\widetilde{\rho_0}(\boldsymbol{k}+\Delta\boldsymbol{k}_i)\big)}{\sum_i \exp(\mathrm{i}\,\varphi_i)\,\widetilde{\rho_0}(\boldsymbol{k}-\Delta\boldsymbol{k}_i)+\exp(-\mathrm{i}\,\varphi_i)\,\widetilde{\rho_0}(\boldsymbol{k}+\Delta\boldsymbol{k}_i)}\right] \quad (17),$$

wherein the second part is called *pert2*($\boldsymbol{x}$). This gives

$$R(\boldsymbol{x}) = \delta(\boldsymbol{x}-\Delta\boldsymbol{x})\cdot\sum_i \cos(i\Delta\boldsymbol{k}_i\Delta\boldsymbol{x}) \;+\; pert2(\boldsymbol{x}) \qquad (18).$$

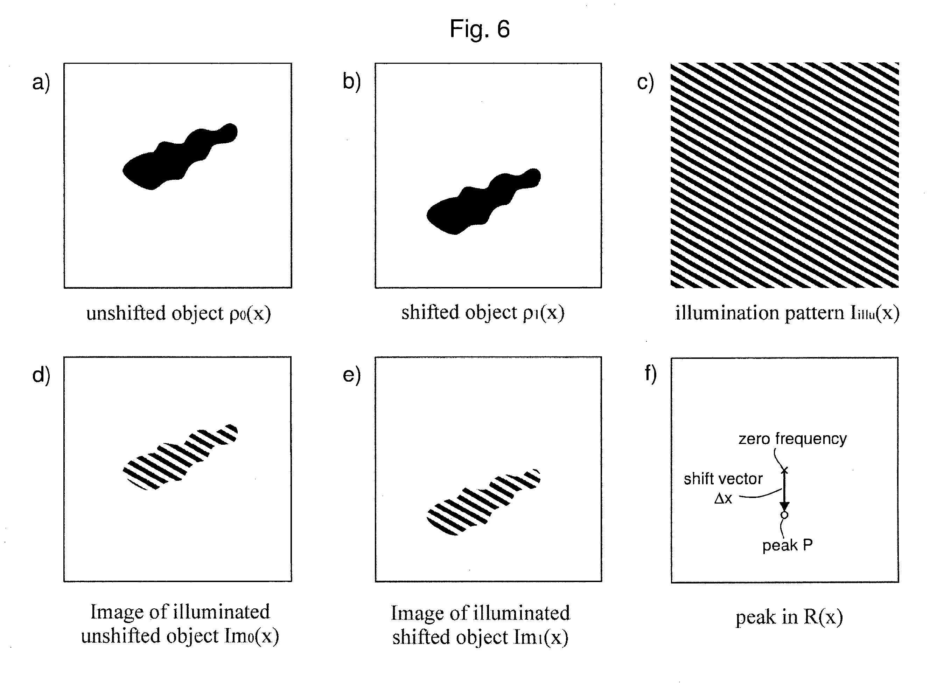

The sum in this expression is constant. In practice, the position of the peak of the delta function in ($\boldsymbol{x}$), and thus the shift vector $\Delta\boldsymbol{x}$, can be found easily despite of the perturbation *pert2*($\boldsymbol{x}$). In particular, the shift vector $\Delta\boldsymbol{x}$ describing the shift of the relative position of the specimen with respect to the projected illumination pattern, which occurred between the capturing of the primary image and the capturing of the second or subsequent image, can be obtained by determining the position of the maximum in intensity (i.e. the peak) of the analytic deconvolution $R(\boldsymbol{x})$. This approach is schematically illustrated in Fig. 6 which is described in more details below.

In summary, the processing of the captured images may comprise determining the non-controlled shift of the relative position of the specimen with respect to the illumination pattern projected onto the specimen for each image of the series. More specifically, the non-controlled (e.g. stochastic/random) shift which occurred between the capturing of a particular image of the series and the capturing of a reference image may be determined. Subsequently, each image of the series is subjected to an a-posteriori shifting to reverse the determined shift of the relative position of the specimen with respect to the projected illumination pattern, thereby obtaining a corresponding shifted image. The shifted images may be processed to extract a sub-resolution image of the specimen.

The reference (primary or unshifted) image may be for example a first image in the series of images of the observed specimen. Each subsequent image of the series may be shifted in an uncontrolled manner (e.g. by random/stochastic shifting) with respect to the primary image.

The non-controlled shifts of the specimen with respect to the illumination pattern projected onto the specimen for each image of the series are determined by applying an analytic deconvolution of each of the images of the series by a primary, unshifted image (reference image) to obtain a corresponding deconvolved image and determining the position of a maximum of the analytic deconvolution of each of the deconvolved images. For each of the second and subsequent images of the series, the non-controlled shift of the relative position of the specimen with respect to the illumination pattern projected onto the specimen is determined from the respective position of the maximum of the analytic deconvolution.

The determining of the non-controlled shift of the specimen between a captured first image $Im_0$ (reference image) and a captured second image $Im_1$ may comprise:

Fourier-transforming the captured first image and the captured second image;
dividing the Fourier-transformed second image by the Fourier-transformed first image to obtain a divided image, wherein the dividing is preferably performed pixel by pixel, i.e. each pixel of the first image is divided by a corresponding pixel of the second image;
inverse Fourier-transforming the divided image; and
determining the position of a maximum of intensity of the inverse Fourier-transformed divided image (i.e. the intensity peak P of the divided image, which results from the delta function, see equation 18).

The position of a maximum of intensity of the inverse Fourier-transformed divided image represents the non-controlled shift of the relative position of the specimen with respect to the illumination pattern projected onto the specimen, which occurred between the capturing of the first image and the capturing of the second image (i.e. the non-controlled shift which is associated with the second image).

The second image $Im_1$ may then be shifted a-posteriori by the obtained shift to reverse the corresponding non-controlled (e.g. stochastic/random) shift of the specimen with respect to the projected illumination pattern and to produce a shifted image. This can be accomplished, for example, by first frequency filtering the images to remove the primary illumination pattern information from the images and afterwards shifting the images iteratively. The a-posteriori shifting of the second image may also be accomplished by multiplying the Fourier transform of the image with $\exp(ik\Delta x)$ and transforming it back to the real space. Other methods may also be used.

The same procedure may be repeated for all images (i.e. the third and each subsequent image out of the series of captured raw images) which are associated with a plurality of different shifts (i.e. relative positions of the specimen with respect to the projected illumination pattern). That is, also the third and each subsequent image of the series is Fourier-transformed and the Fourier-transformed third and each subsequent image of the series is divided by the Fourier-transformed first image to obtain corresponding divided images. Each divided image may then be Fourier-transformed and the corresponding positions of a maximum of intensity of the inverse Fourier-transformed divided images, and thus, the corresponding non-controlled shifts (which respectively occurred between the capturing of the first image and the capturing of the third and each subsequent image of the series), may be determined in an analog manner as described above.

The subsequent processing of the shifted raw images to extract a sub-resolution image may comprise applying conventional frequency space based SMI reconstruction algorithms as described, e.g. in R. Heintzmann and C. Cremer, "Laterally modulated excitation microscopy: Improvement of resolution by using a diffraction grating", proceedings of SPIE (1999), 3568, 185. Since these methods are known, a detailed description thereof will be omitted.

The illumination pattern may be projected onto the specimen through at least one objective of the microscope having a numerical aperture of less than 0.5. Preferably, the numerical aperture of the at least one objective is in the range of 0.1 to 0.5 or in the range of 0.1 to 0.3. The use of a low numerical aperture objective enables large working distances, for example working distances in the range of several centimeters. Due to the relatively large working distances and at the same time high resolution, the method for obtaining a sub-resolution image of a specimen using such a large distance microscope is particularly suitable for a wide range of biological and medical applications and in particular for in-vivo imaging.

The illumination of the specimen may be synchronized with the capturing of raw images, so that the specimen may be illuminated only when images are captured. For example, the illumination light may be a stroboscopic light, i.e. may be switched on- and off, preferably in a millisecond frame. In particular, the illumination light may be only projected onto the specimen (said on-time) when the camera acquires an image and may be switched off or redirected away from the specimen (said off-time) when the camera reads out.

The duration of the on-times during which the specimen is illuminated may be shorter than the duration of the off-times during which the illumination of the specimen is interrupted. Thus, the distance the specimen moves during the on-time may be shorter than the distance the specimen moves during the off-time. For example, the on-time (illumination and acquisition) timeframes may be of order of 10 ms and the off-times/timeframes may be of order of 100 ms. Accordingly, the captured images are less blurred and the overall illumination time can be significantly reduced. Further, the specimen is not subjected to a permanent illumination which might degrade or damage it. This may be important for many biological and/or medical applications, particularly in the field of ophthalmoscopy.

The method may further comprise the steps of:

rotating the specimen along an axis perpendicular to the optical axis of the microscope to a plurality of rotation angles;
at each rotation angle obtaining a set of (raw) images including a plurality of (raw) images captured at a plurality of different relative positions of the specimen with respect to the illumination pattern projected onto the specimen;
generating a three-dimensional image based on the obtained sets of (raw) images at the plurality of rotation angles.

The three-dimensional (3D) image may be generated based on the sets of (raw) images by

processing the set of images obtained at a specific rotation angle to obtain a sub-resolution image of the specimen at that specific angle;
generating a three-dimensional image based on the sub-resolution images at the plurality of rotation angles using for example various (fluorescence) tomographic techniques, such as for example a deconvolution approach.

Alternatively or in addition, the method may further comprise the steps of:

focusing the illumination pattern of illumination light in a plurality of different focal planes;
for each focal plane obtaining a set of images including a plurality of images captured at a plurality of different relative positions of the specimen with respect to the illumination pattern projected onto the specimen;
generating a three-dimensional image based on the obtained sets of images for the plurality of different focal planes.

When projecting the illumination pattern of illumination light onto the specimen, the illumination pattern may be focused in a focal plane, i.e. the illumination pattern is sharply displayed or focused in this focal plane. In case of a two-dimensional specimen/object, the focal plane generally coincides with the object plane and a plurality of images are captured for this focal plane. These images are then processed in the manner described above to obtain a two-dimensional sub-resolution image.

In case of a three dimensional specimen/object the above procedure may be repeated for a plurality of different focal planes intersecting the specimen/object, thereby obtaining a plurality of images of different (thin) slices or layers of the specimen/object in the cross-sectional area of the specimen/object and the focal plane. For each focal plane a plurality of images is captured at a plurality of different relative positions of the specimen with respect to the illumination pattern projected onto the specimen. The captured images are further processed in order to generate a sub-resolution three-dimensional (3D) image. In particular, the plurality of images captured at each different focal plane may be processed to obtain a corresponding two-dimensional sub-resolution image of the respective cross-sectional area of the specimen in the manner described above, by advantageously using non-controlled relative movements of the specimen with respect to the illumination pattern. The obtained two-dimensional sub-resolution images may be then fused to form a three-dimensional image. An advantage of this approach is that the specimen/object does not need to be rotated. By processing of the obtained images captured at a plurality of different focal planes, an improved three-dimensional resolution may be achieved.

By combining the method for obtaining a sub-resolution image using patterned illumination light with axial tomography or other three-dimensional approaches, a three-dimensional image of the observed specimen with improved resolution not only along the lateral direction, but also along the axial direction can be generated. This approach could for example be used to generate high resolution 3D images (with best values of ~ 100 nm) of specimens in various biological, medicine and non-biological applications and deliver images with enhanced resolution compared to a state of the art confocal microscope (~200 nm lateral, ~500 nm axial resolution; The 3D observation volume being a measure for the 3D resolution thus produced by the combination of axial tomography with a high numerical aperture lens and structured illumination can thus be reduced by about twenty times compared with a state of the art confocal microscope; i.e. the 3D volume resolution can be enhanced by the same factor).

The method may further comprise a step of sorting-out of one or more of the captured (raw) images, wherein a particular (raw) image is sorted out if it is determined that the stochastic variation or shift of the relative position of the specimen with respect to the illumination pattern projected onto the specimen during the capturing of the (raw) image exceeds a predetermined threshold.

If the stochastic variation or shift of the relative position of the specimen with respect to the illumination pattern projected onto the specimen during a certain on-time exceeds a predetermined threshold, derived from the suitability of this threshold for the reconstruction of a sub-resolution image, the according (raw) image will be blurred. The predetermined threshold may be 0.5 to 10 $\mu$m, preferably 1 to 5 $\mu$m and most preferably about 2 $\mu$m. The blurring of the captured (raw) image may negatively influence the resolution of the microscope. Thus, the blurred images may be advantageously sorted out before subjecting them to further processing. The sorting out of the one or more of the captured (raw) images may comprise a frequency analysis of the captured (raw) image, wherein the absence of high frequencies except for the illumination pattern frequencies indicates that the respective (raw) image is blurred.

The method may further comprise a step of compensating aberrations of the wavefront of the fluorescent light emitted from the observed specimen. The compensating of aberrations of the wavefront of the fluorescent light emitted from the observed specimen may comprise detecting the wavefront aberrations and controlling a wavefront compensation component (such as for example a deformable mirror) to compensate at least partially for the detected wavefront aberrations. By advantageously employing wavefront compensation by means of adaptive optics in combination with structured illumination, the resolution may be further improved. Compensating wavefront aberrations may be in particular advantageous in the field of ophthalmology when the observed specimen is a patient's eye, the eye having itself an imperfect optical system with various aberrations. It may be further in particular advantageous in the field of endoscopy.

The method may be further combined with localization microscopy methods, without having to significantly change the optical layout of the employed microscope and/or increase its complexity.

According to another aspect, there is provided a microscope, in particular a large distance microscope for fluorescence and/or reflection illumination observations of a specimen. The large distance microscope is in particular a microscope (e.g. a fluorescent microscope), in which the working distance, i.e. the distance between the at least one microscope objective or the objective system and the observed specimen, is larger than 1 mm or larger than 1 cm and in particular within the range of 1 mm to 15 cm.

The large distance microscope comprises a light source which emits illumination (e.g. excitation) light. The light source may comprise one or more lasers (such as for example a diode pumped solid state laser), one or more light emitting diode(s) or any other suitable light source. The light source does not necessarily have to be a coherent light source. The light source may further comprise other optical elements, such as for example a collimator, etc.

The large distance microscope further comprises a pattern generation system arranged in the optical path of the illumination light, said pattern generation system being configured to generate an illumination pattern of the illumination light. The pattern generation system may comprise one or more spatial light modulator(s) and/or diffraction grating(s) and/or an interferometer and/or other optical elements. The pattern generation system may for example be constituted of or comprise a two dimensional fixed grating or grid. In another example the pattern generation system may be constituted by or comprise one or more spatial light modulators, such as micro-LCD spatial light modulator. The light source, the pattern generation system, the at least one microscope objective and optionally other optical elements (such as a collimator, an optical shutter, beam splitter(s), mirrors, filters, etc.) may constitute the illumination system of the microscope.

The large distance microscope comprises further at least one objective arranged and configured to illuminate the specimen by projecting the illumination pattern onto the specimen. The objective may comprise a focusing lens system which is configured to focus the illumination light in a way that the pattern structure shown in an image plane is imaged on the object plane. Typically, the objective comprises a plurality of static and/or movable lenses, configured and arranged such as to reduce optical (including chromatic) aberrations. The plurality of lenses may constitute the focusing system of the objective. In an embodiment the large distance microscope comprises one objective through which the specimen/object is illuminated and/or reflected light or fluorescent light is detected. It is also possible to employ arrangements with two or more objectives, through which the specimen/object is detected and reflected light or fluorescent light is detected.

In addition, the large distance microscope comprises an image capturing system configured to detect at least a portion of fluorescent light emitted from the specimen and/or to detect at least a portion of illumination light reflected from the specimen, thereby capturing a plurality of (raw) images of the specimen at a plurality of different relative positions of the specimen with respect to the illumination pattern projected onto the specimen, wherein between the capturing of at least two images of the series (for example between the capturing of each two consecutive images of the series) the relative position of the specimen with respect to the illumination pattern projected onto the specimen is shifted or varied in a non-controlled manner (e.g. stochastically). In an example, the observed specimen may be shifted in a non-controlled manner with respect to the unchanged illumination pattern. In ophthalmological applications, for example, the non-controlled (stochastic) shift may be achieved by the saccadic movement of an eye.

The image capturing system may comprise a camera configured and arranged such as to monitor the light emitted and/or reflected by the specimen. In particular, the camera may be a CCD camera. In an example, the image capturing may be synchronized with the image illumination in the manner described above. The microscope and more specifically the illumination system may comprise a controller, particularly a micro-controller, configured to synchronize the image capturing and the image illumination.

The microscope may further comprise a specimen movement detection device configured to detect the movement of the observed specimen and a controller, configured to synchronize the image capturing and the image illumination with the detected movement.

The at least one objective, through which the specimen is illuminated, is advantageously an objective having a low numerical aperture, preferably of less than 0.5. In particular, the at least one objective has advantageously a numerical aperture in the range of 0.1 to 0.5. Thereby, the working distance of the microscope may be increased to a distance of up to several centimeters.

The large distance microscope further comprises a data processing system configured to process the series of captured images or respectively data obtained from the series of captured images, thereby producing a sub-resolution image of the specimen. The data processing system may comprise a data storage, one or more processors and input/output terminals connecting the data processing system with the image capturing system and/or with a monitor or other suitable data output means. The captured images may be stored in the data storage, and the processor or the processing software is configured to process the captured images by carrying out the processing methods as described above.

In particular the processor is configured to determine the shift of the relative position of the specimen with respect to the illumination pattern projected onto the specimen for each captured image in the series and to perform a-posteriori shifting of each captured (raw) image to reverse the corresponding stochastic shift of the specimen with respect to the projected illumination pattern, thereby obtaining shifted images. Further, the processor is configured to process the shifted (raw) images to extract a sub-resolution image of the specimen, as described above.

The data storage may be further configured to store sets of (raw) images, obtained by:

rotating the specimen along an axis perpendicular to the optical axis of the microscope to a plurality of rotation angles; at each rotation angle obtaining a set of (raw) images including a plurality of (raw) images captured at a plurality of different relative positions of the specimen with respect to the illumination pattern projected onto the specimen.

Further, the data processing system (respectively the processor of the data processing system) may be configured to produce the sub-resolution image by applying frequency space based SMI reconstruction algorithms or other suitable reconstruction methods.

The processor may be further configured to generate a three-dimensional image based on the obtained sets of (raw) images at the plurality of rotation angles. In particular, the processor may be configured to process the set of images obtained at a specific rotation angle to obtain a sub-resolution image of the specimen at that specific angle and generate a three-dimensional image based on the sub-resolution images at the plurality of rotation angles using various tomographic approaches, such as for example a deconvolution approach of (fluorescence) tomography.

As discussed in connection with the method for obtaining a sub-resolution image of a specimen, by combining the method for obtaining a sub-resolution image using patterned illumination light with axial tomography approaches, a three-dimensional image of the observed specimen can be generated that has improved resolution not only along the lateral direction, but also along the axial direction. The combination of a structured/patterned illumination with axial fluorescence tomography may find application in a wide range of biological, medicine and other fields.

The large distance microscope may further comprise a pattern shifting component configured to stochastically vary the relative position of the specimen with respect to the illumination pattern projected onto the specimen.

The pattern shifting component may be configured to stochastically shift the observed specimen, the illumination pattern or both. Alternatively or in addition, the intrinsic periodic or non-periodic movement of the specimen itself (which, in particular, may be non-controlled or involuntary) may be used to stochastically shift or vary the relative position of the specimen with respect to the illumination pattern. In this case, the large distance microscope may not require a dedicated pattern shifting component.

The pattern shifting component may be configured to stochastically shift the specimen and/or to perform a stochastic stage scanning, and/or to stochastically move the focusing lens system of the at least one objective.

In an example, the pattern shifting component may comprise a movable object stage configured to move or translate the specimen mounted on the object stage along an x-axis and/or a y-axis in the object plane or in the plane orthogonal to the observation axis of the microscope. The object stage may be further configured to move the object in a direction orthogonal to the object plane.

Alternatively or in addition, the pattern shifting component may be configured to shift the illumination pattern in the image plane. For example, the pattern shifting component may comprise a programmable spatial light modulator and a pattern controller configured to control the spatial light modulator, for example by controlling and/or shifting the pattern displayed on it. In another example, the pattern shifting component may comprise a non-programmable or permanent/fixed diffraction grating or spatial light modulator. In this case, the pattern shifting component may comprise a movable stage configured to move or translate the diffractive grating or the spatial light modulator in the image plane (i.e. a plane substantially orthogonal to the axis or direction of propagation of the illumination light) and optionally in the direction orthogonal to the image plane. In a further example, the patent shifting component may comprise one or more optical elements, such as mirrors, deflectors, etc., configured to scan the generated illumination pattern over the object plane. Still further alternatively or in addition, the pattern shifting component may comprise means configured to move or translate the focusing system of the at least one microscope objective along the optical axis of the microscope/objective and and/or in a plane orthogonal to the optical axis.

The light source of the large distance microscope may be configured to emit stroboscopic illumination light having on- and off-times, wherein the specimen is illuminated only during the on-times, and wherein the on-times are respectively shorter than the off-times during which the illumination of the specimen is interrupted.

The light source may for example comprise a shutter (e.g. a mechanical or electro-optical shutter) and/or an acousto-optic modulator, configured to switch on and off the illumination light. Alternatively, the large distance microscope may comprise one or more optical components (such as digital mirror(s)) configured to divert the illumination light away from the observed specimen during the off-times.

The large distance microscope may further comprise a wavefront compensator arranged in an image detection arm or path of the large distance microscope configured to compensate for optical aberrations, in particular diffraction aberrations. For example, the wavefront compensator (comprising for example a deformable mirror and/or other adaptive optics elements) may be located in a conjugate eye-lens plane. The wavefront compensator may be adjusted iteratively by analyzing the fluorescence image of the specimen (i.e. the image of the specimen obtained by detecting at least a portion of the emitted fluorescent light) or the reflection image of the specimen (i.e. the image of the specimen obtained by detecting at least a portion of the reflected illumination light). Alternatively or additionally, the wavefront compensator may be adjusted iteratively by analyzing an image of the specimen of scattered/reflected light from an additional light source (e.g. an infrared laser or LED). The wavefront compensator may further comprise a wavefront sensor (such as a Shack-Hartmann sensor) configured to detect and/or analyze the aberrations in the emitted or reflected light from the specimen.

The large distance microscope may further comprise a collimator to collimate the illumination light. The collimator may be positioned in front of the pattern generation system, i.e. in the optical path of the illumination light emitted by the light source. The collimator may be an adjustable collimator, with the help of which the size of the illuminated field may be adjusted.

The large distance microscope may further comprise one or more beam splitter configured to separate the illumination light illuminating the specimen from the fluorescent light emitted from the illuminated specimen and/or the illumination light reflected from the illuminated specimen. In case of reflection observations, the beam splitter may have for example a reflection-to-transmission ratio of R/T = 0.1. In case of fluorescence observations, the beam splitter may be a dichromatic beam splitter. The beam splitter (e.g. a dichromatic beam splitter) may be arranged such that the illumination pattern of illumination light produced by the pattern generation system is imaged at the back focal plane of the at least one objective by a reflection on the beam splitter or through the beam splitter. In particular, the beam splitter may be positioned in the observation/image detection path of the microscope between the at least one objective and the image capturing system.

The large distance microscope may further comprise a filter arranged in front of the image capturing system and configured to transmit fluorescent light and/or reflected light and to block remaining illumination light (e.g. excitation light).

The pattern generation system may comprise an intensity modulating light transmitting spatial light modulator for spatially modulating the intensity of the illumination light. Preferably, the pattern generation system may comprise a micro liquid crystal display (micro-LCD), such as for example used in mass produced light projectors. The micro-LCD may display a pattern or a structure in an image plane perpendicular to the optical path of the microscope. Thus, the illumination light transmitting the micro-LCD may be spatially modulated in its intensity by the displayed pattern or structure in the image plane. The intensity modulating light transmitting spatial light modulator (for example a micro-LCD) may comprise a controller which may be driven by the DVI port of a computer. Thereby, the displayed pattern or structure may be controlled. Instead of or in addition to the micro-LCD, an interferometer or a conventional optical grid (particularly a fixed two-dimensional grating) may be used to generate the illumination pattern of illumination light. It is of course possible to employ an intensity modulating light reflecting spatial light modulator or other types of spatial light modulators.

According to another aspect, there is provided a computer implemented method for generating sub-resolution images of a specimen based on a series of (raw) images of the specimen obtained by a microscope (e.g. a fluorescence microscope), wherein

said series of (raw) images is obtained by

projecting an illumination pattern of illumination light onto the specimen, thereby illuminating the specimen, and

detecting at least a portion of fluorescent light emitted from the specimen and/or detecting at least a portion of illumination light reflected from the specimen, thereby capturing a series of (raw) images at a plurality of different relative positions of the specimen with respect to the illumination pattern projected onto the specimen, wherein between the capturing of at least two images the relative position of the specimen with respect to the illumination pattern projected onto the specimen is shifted in a non-controlled manner; and wherein

said method comprises the steps of
receiving said series of (raw) images of the specimen;
for each received image determining the non-controlled shift of the relative position of the specimen with respect to the illumination pattern projected onto the specimen;
a-posteriori shifting of each received (raw) image to reverse the corresponding non-controlled (e.g. stochastic) shift of the specimen with respect to the projected illumination pattern, thereby obtaining a corresponding shifted image; and
processing the shifted images to extract a sub-resolution image.

The a-posteriori shifting of each received (raw) image and the processing of the shifted images may be carried out as described above in connection with the method for obtaining sub-resolution images of a specimen using a fluorescence and/or reflection microscope.

According to yet another aspect, a computer program product, which, when loaded into the memory of a computer and executed by the computer may perform the above computer implemented method. The computer program product may be tangibly embodied in an information carrier.

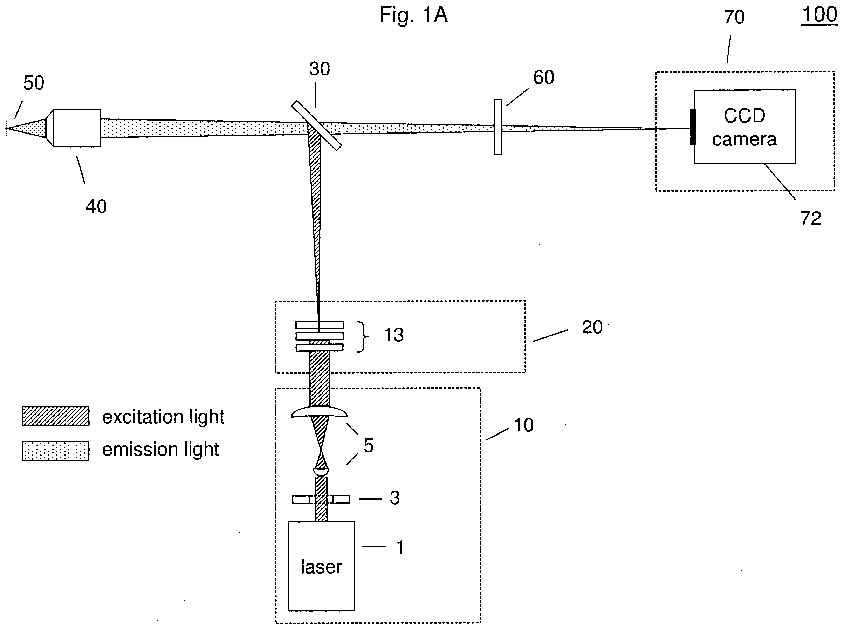

A schematic representation of a fluorescent microscope (a large distance nanoscope or LDN) according to an example of the invention is shown in Fig. 1A. The shown large distance nanoscope may be used as a (high resolution) ophthalmoscope.

Optical arrangement

In this example, band limited fluorescence excitation light is generated by a light source 10. The light source 10 comprises a laser 1, a laser shutter 3 and a collimator 5. The laser may be a diode pumped solid state laser (DPSS laser) with 532 nm wavelength and 800 mW light power. The light source does not necessarily have to emit coherent light if a kind of diffraction grating is used as it is the case with the micro-LCD 13. Instead of using shutter, it is possible to use a pulsed laser. For example, the laser current may be directly modulated by a TTL (Transistor-Transistor Logic), thereby switching the laser 1 on and off.

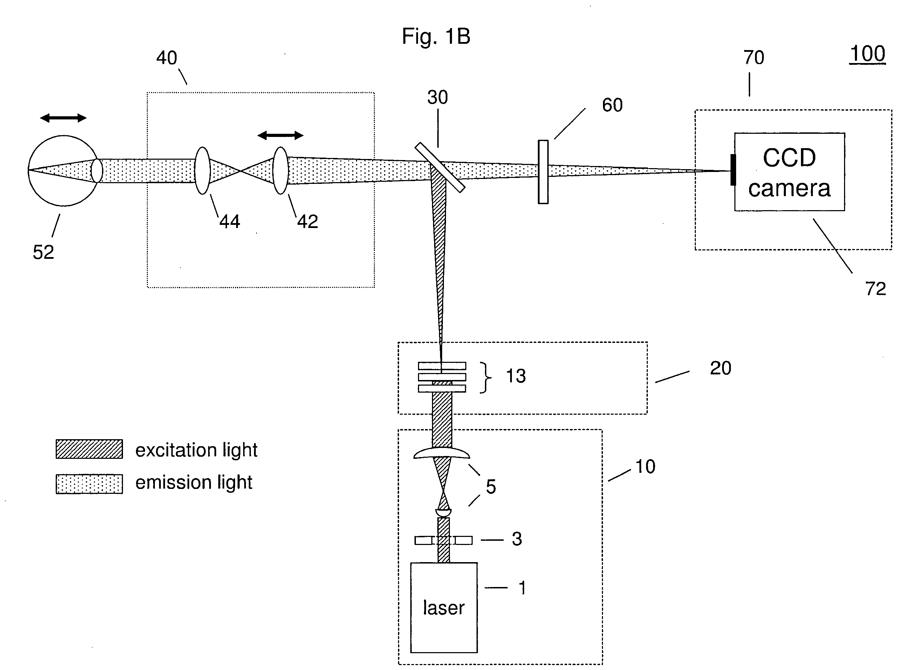

The light may be activated and de-activated in a ms timeframe. This may be done by means of a mechanic shutter 3 arranged in the direct laser beam after the laser head. The illumination timeframes may be in the order to 10 ms and the times between in the order of roughly 100 ms. The light emitted from the laser 1 is collimated by a collimator 5 and directed into a pattern generation system 20. The pattern generation system 20 comprises an intensity modulating light transmitting spatial light modulator. In the example shown in Fig. 1, the pattern generation system is constituted by a micro-LCD 13, such as for example a micro-LCD used in mass produced light projectors. The micro-LCD 13 comprises at least two polarizers and a controller (not shown in Fig. 1) which may be driven by the DVI port of a computer/processor that drives the setup. The same computer/processor may also perform the processing of the captured images to obtain a sub-resolution image as described above. It is also possible to use a conventional, fixed diffraction grating (for example a two-dimensional diffraction grating) or a combination of several (for example three) diffraction gratings with different orientations and/or periods.

The pattern generator system (here: constituted by a micro-LCD 13) is positioned in the illumination path of the large distance microscope between the collimator 5 and a dichromatic (dichroic) beam splitter 30. The image displayed on the micro-LCD 13 (i.e. the image displayed in the image plane) is projected onto the specimen. After passing through the pattern generator system 20, the patterned excitation light is deflected by the dichromatic beam splitter 30 that is reflective for the excitation light and transmissive for the fluorescence emission light. It is also possible to use a chromatic beam splitter having inverted properties, i.e. a dichromatic beam splitter which is transmissive for excitation light and reflective for fluorescence emission light.

The excitation light passes through a large working distance objective lens (microscope objective or objective) 40 having a numerical aperture of less than 0.5, for example in the range of 0.1 to 0.5. The objective lens 40 may be constituted by a single lens or comprise a system of lenses (hereinafter also referred to as a focusing system). For example the objective 40 may comprise one or more fixed focusing lenses and one or more movable (variable) focusing lenses. The focal length of the objective may be fixed or variable. By varying the focal length, different focal planes may be obtained, which enable, for example, the generation of 3D-images.

Depending on the application, the microscope may comprise one or more (e.g. two or three) objectives. For example, more than one objective may be advantageously used for investigating tissue samples.

The working distance may be between several millimetres to several centimetres.

The excitation light is focused by the objective lens (objective) 40 in a way that the displayed pattern on the micro-LCD 13 is imaged in the object plane 50. Because of the nature of imaging systems, only a limited bandwidth of information from the pattern generator system 20 (here the micro-LCD) is transferred to the object plane. Typically, the pattern displayed on the micro-LCD 13 is periodic and only the zero and the plus and minus first orders of diffraction are transmitted into the object plane 50. The higher orders are blocked by additional or existing (e.g. the back side lens of the objective) apertures. It could also be beneficial to block out or to weaken the zero order beam.

In the specimen, fluorochromes may be located. Therefore, fluorescence takes place in the object plane 50. Under relatively low illumination conditions (e.g. in the order of 1 W/cm$^2$, where no noticeable saturation effects occur) as used according to the present example, the fluorescence is linear to the intensity of the excitation pattern projected into the object plane 50. At least a fraction of the emitted fluorescence light is collected by the objective lens 40. This light passes through the focusing system of the objective lens 40 and the dichromatic beam splitter 30, then passes an optional additional blocking filter 60 and finally enters the imaging system 70 which may comprise a CCD camera 72. The blocking filter 60 is used to block out remaining excitation light that passes the dichromatic beam splitter 30 since the excitation light intensity surpasses the fluorescence emission intensity by orders of magnitudes. The image sensor of the imaging system is located in an image plane, which means that light from a point in the object plane 50 is focused on a diffraction limited spot on the sensor. The distance between the image sensor and the object plane 50 may be substantially equal to the distance between the object plane 50 and the micro-LCD 13.

The specimen may be fluorescently labeled by suitable fluorescent dyes or markers. It is also possible to utilize the fluorescence from substances which are naturally present in a given specimen. This for example, if the specimen is an eye, naturally autofluorescent lipofuscin is located in the retinal pigment epithelium Alternatively or additionally, specific regions (e.g. blood vessels) in the back of the eye may be labeled by suitable fluorescent labels (for example fluorescein).

Fig. 1B shows a schematic representation of an ophthalmoscope as an example of a fluorescent microscope (a large distance nanoscope or LDN) for an application for eye examinations (observations). In this example the objective comprises a fixed focusing lens 44 and a movable (variable) focusing lens 42. The variable lens 42 may be moved or translated in particular along the optical axis of the microscope/objective. Both lenses 42 and 44 may be movable lenses. Thus, the focal depth of the lens system/objective may be made variable. The observed specimen in this case is a patient's eye 52. The remaining elements of the large distance microscope are substantially the same as the corresponding elements of the example shown in Fig. 1A, so that a detailed description thereof will be omitted.

The ophthalmoscope may advantageously use the stochastic or quasi-stochastic saccadic eye movements to realize a stochastically variation or shift of the relative position of the observed specimen (the eye) with respect to the illumination pattern. If the eye is fixed (e.g. due to paralysis of the eye muscles and/or use of fixation brackets), the illumination pattern may be stochastically shifted instead of leaving the pattern unchanged and letting the specimen (for example eye) shift. This may be done for example by varying the pattern displayed on the programmable spatial light modulator (such as micro-LCD) or by other appropriate means. The change of the displayed pattern may be conducted during the off-times.

The eye as an optical system has various aberration, including diffraction aberrations, strong enough to limit the resolution power. The employment of a structured/pattern illumination may reduce this problem because object information may be shifted into a region close to the center of the eye lens that is less affected by aberrations. However, it might be beneficial to use adaptive optics to compensate the diffraction aberrations of the eye. For example, a wavefront compensator (not shown in Figs. 1A and 1B) may be located in a conjugate eye-lens plane. The wavefront compensator may be for example a deformable mirror. The wavefront compensator may be adjusted iteratively by analyzing the fluorescence image or an image of the fundus of scattered light from an additional (secondary) light source, such as an additional infrared laser or LED. Another possibility may be to use the wavefront sensor to analyze the aberrations in the reflected light (fluorescence excitation or secondary light source).

Next, the data acquisition and data processing using an exemplary large distance microscope (or, for example, ophthalmoscope) will be described in more detail:

In the following, it is considered that the specimen shifts in a non-controlled (i.e. undetermined or involuntary) manner, e.g. stochastically or quasi-stochastically. However, it is also possible to stochastically shift the illumination pattern, instead of the specimen or to shift both the specimen and the illumination pattern.

In an example stroboscopic illumination and image acquisition may be utilized. The camera 72 and the illumination system, which may comprise the light source 10, the pattern generation system 20, the dichromatic beam splitter 30 and the objective 40, may be set up in a way that the excitation light is only projected onto the specimen when the camera 72 is acquiring (said on-time). When the CCD camera 72 reads out, the excitation beam is toggled off or switched-off (said off-time). This may be accomplished by an application of a high speed (for example <1ms transfer time) mechanic shutter. To achieve much higher transfer times, an acousto-optic modulator or other high-speed optical shutter may be used instead of a mechanical shutter. In addition or alternatively an inherently pulsed (e.g. a pulsed laser) or quickly activatable and de-activatable (e.g. an LED) light source could be used. The shutter 3 and the camera 72 may be triggered by a micro-controller.

Instead of using stroboscopic illumination, it is also possible to use continuous illumination, in particular in combination with a high-sensitive, high-speed camera with rapid read-out time.

The illumination timeframes may be much shorter than the timeframes between two successive illuminations. Thus, the distance the specimen moves during the on-time (image acquiring time) is much shorter than the moving distance that occurs during the off-time. If for example, the observed specimen is an eye, the probability for a saccadic eye movement during the illumination timeframes is low, whereas the probability for eye movement during the off-time is higher. In an example, the illumination pattern is substantially constant during the image acquisition, whereas the specimen moves between the single images. In one image acquisition cycle an amount of 3 to 100 raw images may be taken. If the quasi-stochastic movement during a certain on-time is extraordinarily large, i.e. if it exceeds a certain threshold larger than 2 $\mu$m, the according image might be blurred. The blurred images can be sorted out by the use of a frequency analysis. When high spatial frequencies (in the range of $1/(2 \mu m)$) in the image, except for the illumination pattern frequencies, are absent, the according raw image is blurred due to strong movements of the sample and can therefore be neglected.

After the image acquisition, the single images are shifted to reverse the sample movement a-posteriori. This can be accomplished by first frequency filtering the images to remove the primary illumination pattern information from the images and afterwards shifting the images iteratively. Other, more sophisticated approaches could be applied to do this.

When the images $I_i$ are shifted back by the shifting vector $\vec{v}_i$, the illumination pattern is shifted by the shifting vector relatively to the now constant image which corresponds to a pattern with a phase $\varphi$ relatively to the original pattern. The phase $\varphi$ is given by

$$\varphi = \frac{\mathrm{mod}(\vec{n}_{\mathrm{mod}} * \vec{v}_i, P)}{P} * 2\pi \quad (19),$$

with the unit vector in the direction of illumination pattern modulation $\vec{n}_{\mathrm{mod}}$ and the illumination pattern period $P$.

The shifting vector $\vec{v}_i$ may be determined for example by applying analytical deconvolution and determining the position of the maximum of the intensity of the deconvolved image in the manner described above.

Conventional frequency space based structured excitation illumination (SEI) reconstruction software as described in the publication R. Heintzmann et al., "Laterally modulated excitation microscopy: Improvement of resolution by using a diffraction grating", proceedings of SPIE (1999), 3568, 185, or other suitable reconstruction methods can be applied in order to extract high resolution images.

This results at least in a twofold higher resolution in the direction of the illumination pattern modulation. Further, the optical sectioning is greatly improved by the image reconstruction.

To obtain an isotropic resolution improvement in the lateral plane (the plane orthogonal to the beam path), the procedure may be repeated with rotated illumination patterns (e.g. patterns at 0°, 60°, 120°). This may be achieved by displaying a rotated pattern on the LCD. Alternatively, a two-dimensional pattern that contains several gratings with different orientations in the image plane where the micro-LCD is located may be employed. In this case, a solid, fixed gating can be used. For each angle orientation of the illumination pattern, a plurality of images may be captured at different relative positions of the illumination pattern projected onto the specimen with respect to the specimen, the different relative positions being shifted with respect to each other or with respect to a reference position in an uncontrolled, for example stochastic manner. The plurality of images may be subjected to an image processing to obtain a high resolution image in the manner described above.

If the specimen is fixed, shifts are not disrupting the image quality in certain images on the one hand and cannot be applied for shifting the relative position of the specimen with respect to the illumination pattern projected onto the specimen on the other hand. In this case, the illumination pattern may be moved instead of leaving the pattern unchanged and letting the specimen shift. In an example, this can be done by displaying a shifted pattern on the micro-LCD. This change in pattern is conducted during the off-times.

Next, a further example of a large distance microscope employing a combination with fluorescence tomography will be explained in more detail:

The resolution of an optical system is limited by the numerical aperture (NA) given by

$$NA = n * \sin(\alpha)$$

with the refractive index $n$ and the half opening angle of the objective lens $\alpha$. The resolution (i.e. the smallest resolvable distance) in the lateral direction (in the lateral plane, i.e. the plane perpendicular to the light path) is inversely proportional to the numerical aperture NA. In the axial direction along the light path, however, the resolution is inversely proportional to the square of the numerical aperture NA. For a given objective lens diameter, a doubled working distance (i.e. distance between specimen and objective lens) leads to roughly (small angle approximation) a doubled resolvable distance along the lateral direction but a fourfold resolvable distance along the axial direction (i.e. to a twofold and fourfold increase of the resolvable distance along the lateral and axial direction respectively).

For large (for example larger than 1 cm) working distances, this usually leads to very low resolutions in the axial direction that are orders of magnitude worse than the corresponding resolution along the lateral directions. This fact essentially renders 3D-imaging useless for large working distance conventional fluorescence microscopy. Structured excitation illumination (SEI) doubles the resolution in the lateral direction as wells as in the axial direction, however, the non-proportionality remains.

To improve the axial resolution in fluorescence imaging, axial-tomography has been developed (see for example the publication Heintzmann and Cremer, "Axial tomographic confocal fluorescence microscopy", Journal of Microscopy, 206(1), 2002, pp. 7 to 23). The specimen is located on an apparatus that can be rotated along an axis perpendicular to the beam path (e.g. a glass fiber, a glass tube). With this apparatus the specimen is rotated to different angles and respectively imaged in 3D. Afterwards, by rotating, shifting and re-sampling of the dataset and consecutively applying a multi-point spread function (multi-PSF) deconvolution, a 3D image can be generated that has at least the resolution of the raw images along the lateral direction, but in 3D along the axial direction as well.

In an example, the method for obtaining a sub-resolution image of a specimen by projecting an illumination pattern of excitation light or in other words structured excitation illumination may be combined with axial tomography. This may be achieved by rotating the specimen along an axis perpendicular to the optical axis of the microscope to a plurality of rotation angles and at each rotation angle obtaining a set (rotation dataset) of raw images including a plurality of raw images captured at a plurality of different relative positions of the specimen with respect to the illumination pattern projected onto the specimen.

Each rotation dataset may be processed with conventional Fourier space based structured excitation illumination reconstruction methods. Subsequently, a deconvolution approach of fluorescence tomography may be used for the improvement of axial resolution and generating a three-dimensional image. Alternatively, a multi-PSF deconvolution approach can be used to process conventional structured excitation illumination data after a resorting of the image data. Therefore all the raw data could first be resorted and afterwards processed by a multi-PSF deconvolution algorithm.

In another example a three-dimensional image may be obtained by recording sets of images taken at different focal planes in the manner described above. Each obtained set of images (dataset) comprises a plurality of images captured at different relevant positions of the observed retinal region with respect to the illumination pattern. The obtained sets of images for different focal planes may be then processed with various reconstruction techniques to obtain a sub-resolution three-dimensional image. Thus rotation of the observed specimen be avoided.

The above described approaches could for example be used to generate high resolution 3D images of model organisms (such as for example zebrafish, drosophila larva) and deliver images comparable to a state of the art confocal microscope (~500 nm 3D resolution). Here, the stochastic movement of the specimen could also be used for phase shifting of the illumination pattern relative to the specimen.

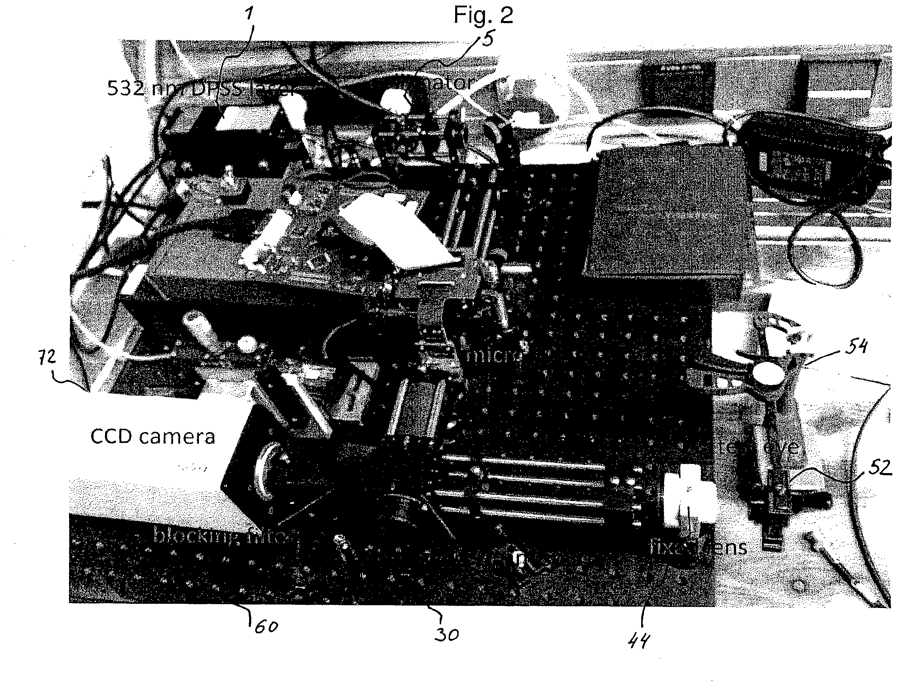

Fig. 2 is a photograph of an exemplary optical arrangement of a large distance microscope (for an application as an ophthalmoscope) according to the example shown in Fig. 1B. In particular, Fig. 2 shows a light source 10 comprising a laser 1 and a collimator 5, a pattern generation system 20 (here: a micro-LCD 13), a chromatic beam splitter 30, a blocking filter 60 and an image capturing system comprising a CCD camera 72. Moreover, a focusing lens system comprising a movable lens 42 and a fixed lens 44 forms the objective of the microscope. The specimen of Fig. 2 is a test eye 52 which is mounted on a specimen mounting apparatus 54.

The test eye (test sample or test specimen) consists of a fixated human retinal pigment epithelium tissue imbedded between two cover slips and fixed on the inner back of an artificial test eye model. The artificial test eye model consists basically of a single lens with focal length and aperture corresponding to the focal length and aperture of a human eye.

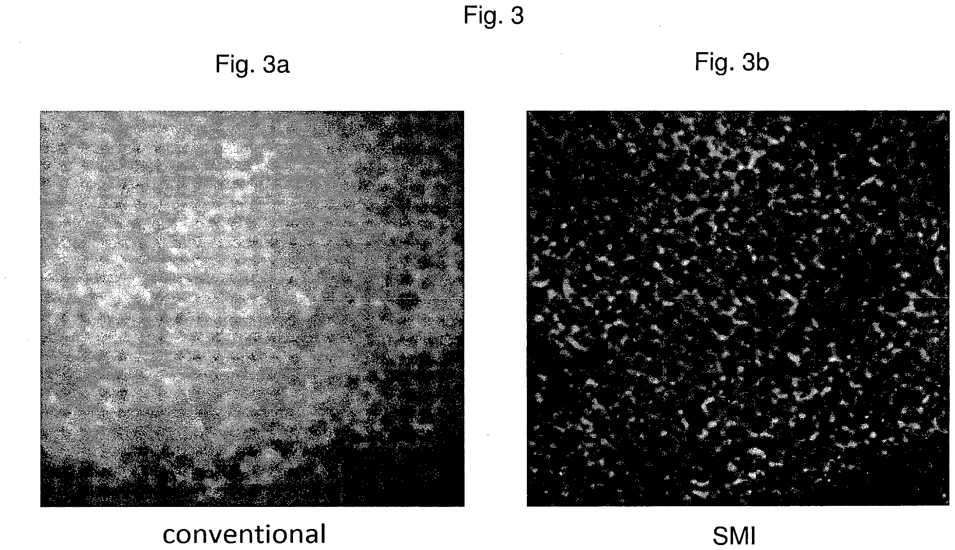

Fig. 3 shows two microscope images of the inner back of a test eye, wherein the first image (Fig. 3a) has been obtained by a conventional microscope and the second image (Fig. 3b) has been obtained by a large distance nanoscope using structured illumination according to an example of the present invention. As evident upon a comparison of the two images, the second image (Fig. 3b) has a considerably improved resolution and contrast. To produce the conventional microscope image (Fig. 3a), the non-invasive ophthalmoscope has been used in the homogeneous illumination mode, i.e. without structured illumination.

The resolution of the large distance microscope and in particular the ophthalmoscope according to an example of the present invention may be as high as several micrometers (which is about twice as high than in conventional systems with the same numerical aperture). In particular, by employing a large distance microscope using structured illumination according to an example of the present invention, it is possible to distinguish single cells.

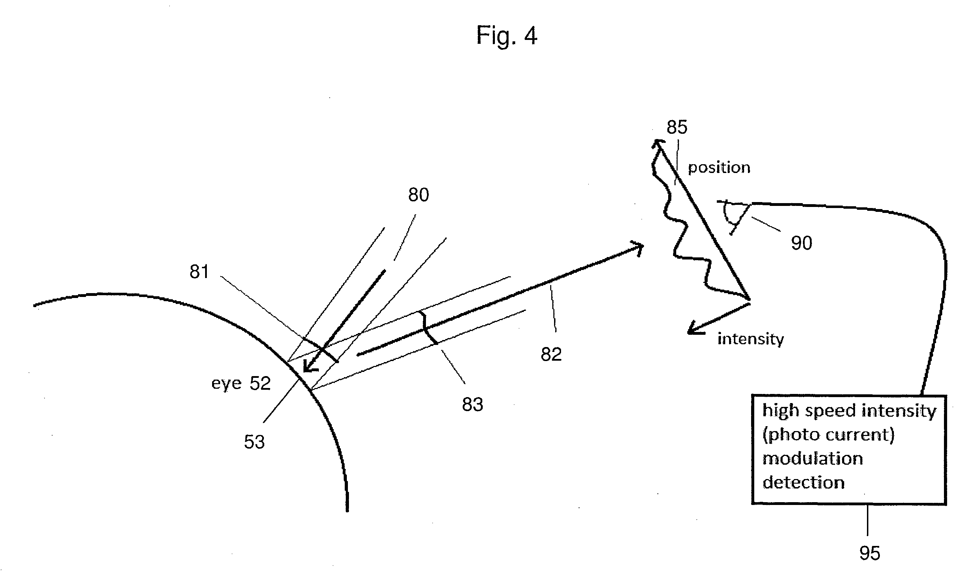

In an example, the large distance microscope (LDN or large distance nanoscope) may be used for observing the eye fundus. In this example the saccadic movement of the eye may be advantageously used to achieve the stochastic shift of the relative position of the specimen (the observed eye) with respect to the illumination pattern. As the saccadic movement is quasi-periodic, it may be beneficial to trigger illumination and image acquisition shortly after a saccade. The trigger signal could be given by a high speed saccade detection device. In order to achieve the necessary high speed and sensitivity, the state of the art solutions might not be fast enough. Therefore, a different approach according to **Fig. 4** may be used.

**Fig. 4** is a schematic view of a saccade detection device (as an example of a specimen movement detection device) which works with reflected light (e.g. reflected at the eye surface). The saccade detection device comprises a high speed light- or photo-detector 90 (e.g. a photo diode). In particular, the specimen 52 (in this example an eye) may be illuminated by an additional, slightly focused and coherent laser light 80 (different from the excitation light) which is reflected at the specimen's surface 53. Since the eye surface is not perfectly spherical, the wavefront of the laser light 81 changes upon reflection at the eye surface. Hence, the angle of reflection of the reflected light varies with the position of the eye. Additionally, because of the distortion of the wavefront which is induced by the non-spherical surface of the eye, the reflected light will interfere to generate an inhomogeneous intensity distribution in distance (greater than several cm) of the eye surface, wherein a change or modulation of the inhomogeneous intensity distribution indicates a saccadic movement. In Fig. 4, the wavefront of the laser light after reflection at the eye surface is indicated by the reference number 83. A high speed photo-detector detects the intensity distribution of the reflected laser light 82, i.e. the reflected light interference intensity profile 85 (also referred to as "speckles") by measuring a corresponding photo current. The intensity distribution depends on the position of reflection on the eye surface. Thus, when the eye performs a saccadic movement, the intensity distribution changes or modulates. The saccade detection device comprises further a saccadic eye movement determination component 95 configured to detect/calculate the high speed intensity modulation and thus the saccadic eye movement from the signal (modulated photocurrent) produced by the high speed photo-detector 90. The illumination of the specimen 52 with patterned excitation light and/or the image acquisition may be then synchronized with the specimen's (in this case eye's) movement. By employing an additional saccade detection device, the number of redundant and faulty raw images may be reduced.

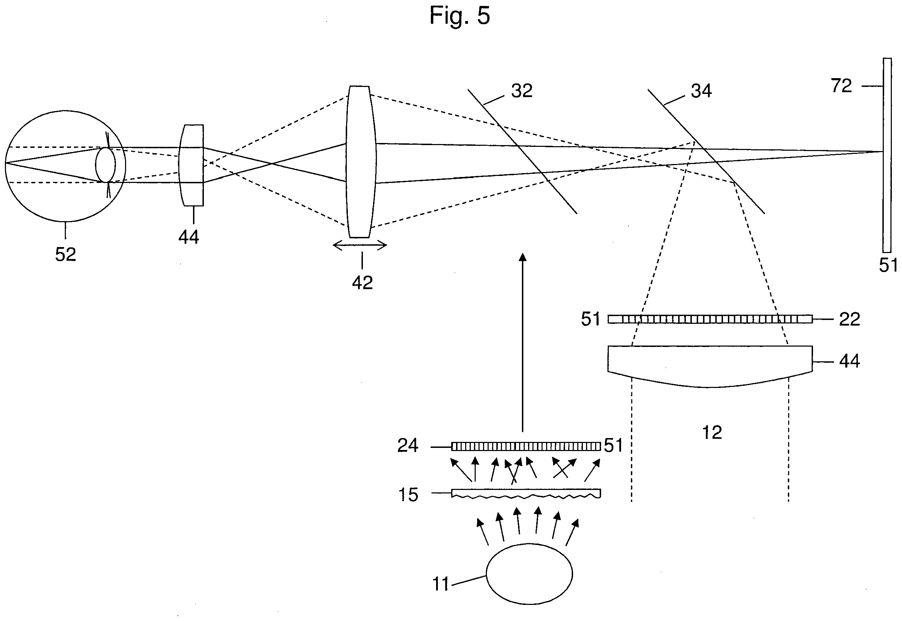

**Fig. 5** shows a schematic representation of the optical arrangement of an ophthalmoscope (as an example of a fluorescent and/or reflection microscope for an application for eye examinations or observations), which may be operated in a fluorescence mode, in a reflection mode or in a combination thereof. In this example, a fixed focusing lens 44, a movable (variable) focusing lens 42 and a CCD camera 72 are similar to Figs. 1A and 1B, so that a detailed description thereof will be omitted. As in Fig. 1B, the observed specimen is a patient's eye 52. Reference sign 51 indicates the image planes in Fig. 5.

With respect to the fluorescence mode, the specimen (e.g. the retinal region of the eye 52) is illuminated by projecting an illumination pattern of excitation light onto the specimen (e.g. the retinal region of the eye). The illumination pattern of excitation light is generated by a light source 12 which emits excitation light in order to pass through a lens 8 and a pattern generation system 22. The excitation light has a wavelength suitable to excite the fluorochromes located in the specimen (e.g. the retinal region of the eye 52). The pattern generation system 22 comprises an intensity modulating light transmitting spatial light modulator (e.g. a micro-LCD or a diffraction grating). After passing through the pattern generator system 22, the patterned excitation light is deflected by the dichromatic beam splitter 34 that is reflective for the excitation light and transmissive for the fluorescence emission light. It is also possible to use a chromatic beam splitter having inverted properties, i.e. a dichromatic beam splitter which is transmissive for excitation light and reflective for fluorescence emission light.

With respect to the reflection mode, the specimen (e.g. the retinal region of the eye 52) is illuminated by projecting an illumination pattern of illumination light onto the specimen (e.g. the retinal region of the eye). The illumination pattern of illumination light is generated by a light source 11 which emits illumination light in order to pass through a diffuser 15 and a pattern generation system 24. The pattern generation system 24 comprises an intensity modulating light transmitting spatial light modulator (e.g. a micro-LCD or a diffraction grating). After passing through the pattern generator system 24, the patterned illumination light is deflected by the beam splitter 32 which may be characterized by a reflection to transmission ratio of R/T = 0.1, i.e. the dichromatic beam splitter 32 may be configured to only reflect 10% of the total amount of illumination light.

With respect to a combination of fluorescence mode and reflection mode, an optical switch (not shown in Fig. 5) may be used to either illuminate the specimen by means of light source 12, lens 44, pattern generation system 22 and dichromatic beam splitter 34 or by means of light source 11, diffuser 15, pattern generation system 24 and beam splitter 32. The optical switch may be realized by using polarizers and analyzers.

**Fig. 6** is a schematic illustration of the determination of the non-controlled (e.g. stochastic/random) shift of the relative position of the specimen (e.g. an eye) with respect to the illumination pattern projected onto the specimen. Fig. 6a shows an example of an unshifted object having a fluorophore distribution $\rho_0(\boldsymbol{x})$. This object may be shifted in a non-controlled manner (in case of an eye, due to stochastic/random saccadic movements), thereby varying its position as illustrated by Fig. 6b. The fluorophore distribution of the shifted object (specimen) is given by $\rho_1(\boldsymbol{x}) = \rho_0(\boldsymbol{x} - \Delta\boldsymbol{x}) = \rho_0(\boldsymbol{x}) * \delta(\boldsymbol{x} - \Delta\boldsymbol{x})$ (see equation 3 above), where $\Delta\boldsymbol{x}$ is the shift vector with respect to the unshifted object. By projecting an illumination pattern $I_{Illu}(\boldsymbol{x})$ (exemplarily shown in Fig. 6c) onto the object, two images, namely the image $Im_0(\boldsymbol{x})$ of the unshifted illuminated object (Fig. 6d) and the image $Im_1(\boldsymbol{x})$ of the shifted illuminated object (Fig. 6e), may be captured. As illustrated in Fig. 6f, the shift vector $\Delta\boldsymbol{x}$ may be obtained by determining the position of the peak P (i.e. the maximum) of the analytic deconvolution $R(\boldsymbol{x})$ (see equations 15 to 18 above), which results from the delta function $\delta(\boldsymbol{x} - \Delta\boldsymbol{x})$ being contained in the analytic deconvolution $R(\boldsymbol{x})$ (see equation 18 above).

Further exemplary methods and apparatuses for obtaining a sub-resolution image of a specimen may comprise one or more of the following features:

The illumination pattern may be realized by spatially modulating illumination intensity. The illumination pattern (e.g. a periodic illumination pattern) may be moved during the exposure and single images may be taken at different positions of the excitation pattern on the specimen. Subsequently, the received data may be processed further by using a general purpose or a dedicated computer or a computer system in order to obtain high resolved images.

In an example, by means of a transmitting liquid crystal array (micro-LCD display) arranged in the optical path of the excitation light, a grid is projected to the specimen. The optics is configured and arranged such that the LCD is located in an intermediate image plane of the object plane. The fluorescence distribution in the object plane, excited by the excitation pattern, is imaged on a camera which is also located in an intermediate image plane. A pattern (for example a fringe pattern or a grid) is displayed on the display. Optionally, the displayed pattern can be shifted and changed arbitrarily. Images are taken at different positions of the illumination pattern. For this purpose, the pattern may be shifted between the expositions. This can be done by either a shift of the whole or a part of the apparatus with respect to the specimen, or by a shift of the grid displayed on the display. It may also be possible to generate the grid by other means, for example by means of an interferometer.

In general, in an embodiment intrinsic or externally caused periodic or non-periodic or non-controlled (e.g. stochastic) movements of the specimen (e.g. eye) can be used for improving the resolution and the contrast. For example, the saccadic movement of the specimen (e.g. an eye) may be in the order of 2 to 120 arcminutes. This rotation results in a lateral shift of the eye by 3.5 to 200 $\mu$m. This range is suitable for the application of the saccadic eye-movement to shift the illumination pattern relative to the fundus as described above.

Preferably, the relative position of the specimen with respect to the illumination pattern projected onto the specimen is constant during an acquisition cycle, whereas said relative position varies between the single images.

The method for obtaining a sub-resolution image of a specimen using a microscope and the large distance microscope described above may be used for many applications, for example in the field of contactless diagnostics, particularly in dermatology, dentistry, tissue diagnostics, endoscopy, developmental biology, embryology, the investigation of model organisms (zebrafish, Drosophila larva), neurobiology, animal models, and/or ophthalmology. In particular, they may be used in the ophthalmoscopy or funduscopy for the inspection and evaluation of pathological changes in the visible parts of the eye, particularly the retina and the retina blood vessels.

**List of Reference Numerals**

| | |
|---|---|
| 1 | laser |
| 3 | laser shutter |
| 5 | collimator |
| 10 | light source |
| 11 | light source for reflection illumination |
| 12 | light source for fluorescence illumination |
| 13 | micro-liquid crystal display (micro-LCD) |
| 15 | diffuser |

| 20  | pattern generation system |
|-----|---------------------------|
| 22  | pattern generation system for fluorescence illumination |
| 24  | pattern generation system for reflection illumination |
| 30  | dichromatic beam splitter |
| 32  | beam splitter for reflection illumination (e.g. R/T = 0.1) |
| 34  | dichromatic beam splitter for fluorescence illumination |
| 40  | objective |
| 42  | movable lens |
| 44  | fixed lens |
| 50  | object plane |
| 51  | image plane |
| 52  | specimen/eye |
| 53  | eye surface |
| 54  | specimen mounting apparatus |
| 60  | filter / blocking filter |
| 70  | imaging system (image capturing system) |
| 72  | CCD camera |
| 80  | laser light |
| 81  | wavefront before reflection |
| 82  | reflected laser light |
| 83  | wavefront of the reflected laser light |
| 85  | reflected light interference intensity profile |
| 90  | photodetector |
| 95  | saccadic eye movement determination component |
| 100 | Large distance nanoscope (LDN) / ophthalmoscope |

## Claims

1. A method for obtaining a sub-resolution image of a specimen (52) using a microscope (100), the method comprising:

   projecting an illumination pattern of illumination light onto the specimen (52), thereby illuminating the specimen (52);

   detecting at least a portion of fluorescent light emitted from the specimen (52) and/or detecting at least a portion of illumination light reflected from the specimen (52), thereby capturing a series of images of the specimen (52) at a plurality of different relative positions of the specimen (52) with respect to the illumination pattern projected onto the specimen (52), wherein between the capturing of at least two images of the series the relative position of the specimen (52) with respect to the illumination pattern projected onto the specimen (52) is stochastically shifted;

   processing the captured images to extract a sub-resolution image of the specimen (52), wherein the processing of the captured images comprises:

      applying an analytic deconvolution of each of a second and subsequent images of the series by a first image of the series to obtain a corresponding deconvolved image;

      determining the position of a maximum (P) of the analytic deconvolution of each of the deconvolved images;

      determining the stochastic shift of the relative position of the specimen (52) with respect to the illumination pattern projected onto the specimen (52) for each of the second and subsequent images of the series from the determined position of the maximum (P) of the analytic deconvolution;

      a-posteriori shifting of each image of the series to reverse the determined shift of the relative position of the specimen (52) with respect to the projected illumination pattern, thereby obtaining a corresponding shifted image; and

      processing the shifted images to extract the sub-resolution image of the specimen (52).

2. The method according to claim 1, wherein the relative position of the specimen (52) with respect to the illumination pattern is stochastically shifted due to stochastic movements of the specimen (52) and/or stochastically shifting the specimen (52), and/or by stochastic stage scanning, and/or by stochastic movements of a focusing lens system (42, 44) of a microscope objective (40).

3. The method according to claim 1 or 2, wherein the determining of the stochastic shift of the relative position of the specimen (52) with respect to the illumination pattern projected onto the specimen (52) comprises:

Fourier-transforming of each of the images of the series;
dividing each of the Fourier-transformed second and each subsequent images by the Fourier-transformed first image to obtain a corresponding divided image;
inverse Fourier-transforming each of the divided images;
determining the position of a maximum (P) of intensity of each of the inverse Fourier-transformed divided images;
determining the stochastic shift of the relative position of the specimen (52) with respect to the illumination pattern projected onto the specimen (52) for each of the second and subsequent images of the series from the determined position of the maximum (P) of intensity of the inverse Fourier-transformed divided image.

4. The method according to any one of the preceding claims, wherein the illumination pattern is projected onto the specimen (52) through at least one objective (40) of the microscope (100) having a numerical aperture of less than 0.5.

5. The method according to any one of the preceding claims, wherein the specimen (52) is illuminated only when images are captured.

6. The method according to claim 5, wherein the duration of on-times during which the specimen (52) is illuminated is shorter than the duration of off-times during which the illumination of the specimen (52) is interrupted.

7. The method according to any one of the preceding claims, further comprising the steps of:

rotating the specimen (52) along an axis perpendicular to the optical axis of the microscope (100) to a plurality of rotation angles;
at each rotation angle obtaining a set of images including a plurality of images captured at a plurality of different relative positions of the specimen (52) with respect to the illumination pattern projected onto the specimen (52);
generating a three-dimensional image based on the obtained sets of images at the plurality of rotation angles.

8. The method according to any one of the preceding claims, further comprising the steps of:

focusing the illumination pattern of illumination light in a plurality of different focal planes;
for each focal plane obtaining a set of images including a plurality of images captured at a plurality of different relative positions of the specimen (52) with respect to the illumination pattern projected onto the specimen (52);
generating a three-dimensional image based on the obtained sets of images for the plurality of different focal planes.

9. The method according to any one of the preceding claims, further comprising a step of sorting-out of one or more of the captured images, wherein a particular image is sorted out if it is determined that the stochastic variation of the relative position of the specimen (52) with respect to the illumination pattern projected onto the specimen (52) during the capturing of the image exceeds a predetermined threshold.

10. A large distance microscope (100) for fluorescence and/or reflection illumination observations of a specimen (52), the microscope (100) comprising:

a light source (10; 11; 12) which emits illumination light;
a pattern generation system (20; 22; 24) arranged in the optical path of the illumination light, said pattern generation system (20; 22; 24) configured to generate an illumination pattern of the illumination light;
at least one objective (40) arranged and configured to illuminate the specimen (52) by projecting the illumination pattern onto the specimen (52);
an image capturing system (70) configured to detect at least a portion of fluorescent light emitted from the specimen (52) and/or to detect at least a portion of illumination light reflected from the specimen (52), thereby capturing a series of images of the specimen (52) at a plurality of different relative positions of the specimen (52) with respect to the illumination pattern projected onto the specimen (52), wherein between the capturing of at least two images of the series there is a stochastic shift of the relative position of the specimen (52) with respect to the illumination pattern projected onto the specimen (52);
a data processing system configured to process the series of captured images by performing the following steps:

applying an analytic deconvolution of each of a second and subsequent images of the series by a first image of the series to obtain a corresponding deconvolved image;

determining the position of a maximum (P) of the analytic deconvolution of each of the deconvolved images;

determining the stochastic shift of the relative position of the specimen (52) with respect to the illumination pattern projected onto the specimen (52) for each of the second and subsequent images of the series from the determined position of the maximum (P) of the analytic deconvolution;

a-posteriori shifting of each image of the series to reverse the determined shift of the relative position of the specimen (52) with respect to the projected illumination pattern, thereby obtaining a corresponding shifted image; and

processing the shifted images to extract a sub-resolution image of the specimen (52).

11. The large distance microscope (100) according to claim 10, wherein the at least one objective (40) has a numerical aperture of less than 0.5.

12. The large distance microscope (100) according to claim 10 or 11, further comprising a pattern shifting component configured to stochastically shift the relative position of the specimen (52) with respect to the illumination pattern projected onto the specimen (52) and wherein the pattern shifting component is configured to stochastically shift the specimen (52) and/or to perform a stochastic stage scanning, and/or to stochastically move the focusing lens system (42, 44) of the at least one objective (40).

13. The large distance microscope (100) according to any one of claims 10 to 12, wherein the light source (10; 11; 12) is configured to emit stroboscopic illumination light having on- and off-times, wherein the specimen (52) is illuminated only during the on-times, and wherein the on-times are respectively shorter than the off-times during which the illumination of the specimen (52) is interrupted.

14. A computer implemented method for generating sub-resolution images of a specimen (52) based on a series of images of the specimen (52) obtained by a microscope (100), wherein

said series of images is obtained by

projecting an illumination pattern of illumination light onto the specimen (52), thereby illuminating the specimen (52), and

detecting at least a portion of fluorescent light emitted from the specimen (52) and/or detecting at least a portion of illumination light reflected from the specimen (52), thereby capturing a series of images at a plurality of different relative positions of the specimen (52) with respect to the illumination pattern projected onto the specimen (52), wherein between the capturing of at least two images of the series the relative position of the specimen (52) with respect to the illumination pattern projected onto the specimen (52) is stochastically shifted; and wherein

said method comprises the steps of

receiving said series of images of the specimen (52);

applying an analytic deconvolution of each of a second and subsequent images of the series by a first image of the series to obtain a corresponding deconvolved image;

determining the position of a maximum (P) of the analytic deconvolution of each of the deconvolved images;

determining the stochastic shift of the relative position of the specimen (52) with respect to the illumination pattern projected onto the specimen (52) for each of the second and subsequent images of the series from the determined position of the maximum (P) of the analytic deconvolution;

a-posteriori shifting of each received image to reverse the corresponding stochastic shift of the relative position of the specimen (52) with respect to the projected illumination pattern, thereby obtaining a corresponding shifted image; and

processing the shifted images to extract a sub-resolution image.

15. A computer program product, which, when loaded into the memory of a computer and executed by the computer performs a computer implemented method according to claim 14.

**Patentansprüche**

1. Ein Verfahren für den Erhalt eines Bildes einer Probe (52) unterhalb der Auflösungsgrenze (*sub-resolution*) unter Verwendung eines Mikroskops (100), wobei das Verfahren Folgendes umfasst:

projizieren eines Beleuchtungsmusters eines Beleuchtungslichts auf die Probe (52), wodurch die Probe (52) beleuchtet wird;

detektieren von mindestens einem Teil des Fluoreszenzlichtes, das von der Probe (52) emittiert wird, und/oder detektieren von mindestens einem Teil des Beleuchtungslichtes, das von der Probe (52) reflektiert wird, wodurch eine Serie von Bildern der Probe (52) an einer Vielzahl von unterschiedlichen relativen Positionen der Probe (52) in Bezug auf das Beleuchtungsmuster aufgenommen werden, das auf die Probe (52) projiziert wird, wobei die relative Position der Probe (52) in Bezug auf das Beleuchtungsmuster, das auf die Probe (52) projiziert wird, zwischen der Aufnahme von mindestens zwei Bildern der Serie stochastisch verschoben wird;

verarbeiten der aufgenommenen Bilder, um ein Bild der Probe (52) unterhalb der Auflösungsgrenze extrahieren, wobei das Verarbeiten der aufgenommenen Bilder Folgendes beinhaltet:

anwenden einer analytischen Dekonvolution bzw. Entfaltung von jeweils einem zweiten und nachfolgenden Bilder der Serie durch ein erstes Bild der Serie zum Erhalt eines entsprechenden entfalteten Bildes;

bestimmen der Position eines Maximums (P) der analytischen Dekonvolution von jedem der entfalteten Bilder;

bestimmen der stochastischen Verschiebung der relativen Position der Probe (52) in Bezug auf das Beleuchtungsmuster, das auf die Probe (52) projiziert wird, für jedes einzelne unter den Bildern zwei und den nachfolgenden der Serie, ausgehend von der bestimmten Position des Maximums (P) der analytischen Dekonvolution;

a-posteriori verschieben eines jeden Bildes der Serie, um die bestimmte Verschiebung der relativen Position der Probe (52) in Bezug auf das projizierte Beleuchtungsmuster umzukehren, wodurch man ein entsprechendes verschobenes Bild erhält; und

verarbeiten der verschobenen Bilder, um das Bild der Probe (52) unterhalb der Auflösungsgrenze zu extrahieren.

2. Das Verfahren nach Anspruch 1, wobei die relative Position der Probe (52) in Bezug auf das Beleuchtungsmuster stochastisch verschoben wird aufgrund von stochastischen Bewegungen der Probe (52) und/oder aufgrund eines stochastischen Verschiebens der Probe (52), und/oder aufgrund eines stochastischen Abtastens des Tisches und/oder aufgrund von stochastischen Bewegungen des Fokussierlinsensystems (42, 44) eines Mikroskopobjektivs (40).

3. Das Verfahren nach Anspruch 1 oder 2, wobei das Bestimmen der stochastischen Verschiebung der relativen Position der Probe (52) in Bezug auf das Beleuchtungsmuster, das auf die Probe (52) projiziert wird, Folgendes umfasst:

Fourier-transformieren von jedem einzelnen der Bilder der Serie;

dividieren von jedem einzelnen unter den Fourier-transformierten Bildern zwei und die nachfolgenden durch das Fourier-transformierte erste Bild zum Erhalt eines entsprechenden dividierten Bildes;

invers Fourier-transformieren von jedem der dividierten Bilder;

bestimmen der Position eines Maximums (P) der Intensität eines jeden Bildes unter den invers Fourier-transformierten dividierten Bildern;

bestimmen der stochastischen Verschiebung der relativen Position der Probe (52) in Bezug auf das Beleuchtungsmuster, das auf die Probe (52) projiziert wird, für jedes einzelne unter den Bildern zwei und den nachfolgenden der Serie, ausgehend von der bestimmten Position des Maximums (P) der Intensität des invers Fourier-transformierten dividierten Bildes.

4. Das Verfahren nach einem der vorhergehenden Ansprüche, wobei das Beleuchtungsmuster auf die Probe (52) durch mindestens ein Objektiv (40) des Mikroskops (100) projiziert wird, das eine numerische Apertur aufweist, die geringer als 0,5 ist.

5. Das Verfahren nach einem der vorhergehenden Ansprüche, wobei die Probe (52) nur beleuchtet wird, wenn Bilder aufgenommen werden.

6. Das Verfahren nach Anspruch 5, wobei die Dauer der Einschaltzeiten, in denen die Probe (52) beleuchtet wird, kürzer ist als die Dauer der Ausschaltzeiten, in denen die Beleuchtung der Probe (52) unterbrochen wird.

7. Das Verfahren nach einem der vorhergehenden Ansprüche, das des Weiteren die folgenden Schritte umfasst:

rotieren der Probe (52) um eine Achse, die zur optischen Achse des Mikroskops (100) senkrecht steht, zu einer Vielzahl an Rotationswinkeln;

bei jedem Rotationswinkel, erhalten eines Bildersatzes, der eine Vielzahl an Bildern enthält, die bei einer Vielzahl an unterschiedlichen relativen Positionen der Probe (52) aufgenommen werden, relativ in Bezug auf das Beleuchtungsmuster, das auf die Probe (52) projiziert wird;

erzeugen eines dreidimensionalen Bildes basierend auf den erhaltenen Bildersätzen bei der Vielzahl an Rotationswinkeln.

**8.** Das Verfahren nach einem der vorhergehenden Ansprüche, das des Weiteren die folgenden Schritte umfasst:

fokussieren des Beleuchtungsmusters des Beleuchtungslichts auf eine Vielzahl an unterschiedlichen Fokalebenen;

für jede Fokalebene, erhalten eines Bildersatzes, der eine Vielzahl an Bildern enthält, die aufgenommen werden bei einer Vielzahl an unterschiedlichen relativen Positionen der Probe (52) in Bezug zum Beleuchtungsmuster, das auf die Probe (52) projiziert wird;

erzeugen eines dreidimensionalen Bildes basierend auf den erhaltenen Bildersätzen für die Vielzahl an unterschiedlichen Fokalebenen.

**9.** Das Verfahren nach einem der vorhergehenden Ansprüche, das des Weiteren einen Schritt umfasst, der Folgendes bewerkstelligt: aussortieren von einem oder mehreren der aufgenommenen Bilder, wobei ein spezielles Bild aussortiert wird, falls bestimmt wird, dass die stochastische Variation der relativen Position der Probe (52) in Bezug zum Beleuchtungsmuster, das während der Aufnahme des Bildes auf die Probe (52) projiziert wird, eine vorbestimmte Schwelle überschreitet.

**10.** Ein Mikroskop (100) mit großem Abstand, um eine Probe (52) unter Fluoreszenz- und/oder Reflektion-Beleuchtung zu beobachten, wobei das Mikroskop (100) Folgendes umfasst:

eine Lichtquelle (10; 11; 12), die Beleuchtungslicht emittiert;

ein Mustererzeugungssystem (20; 22; 24), das in den Strahlengang des Beleuchtungslichtes angeordnet wird, wobei das genannte Mustererzeugungssystem (20; 22; 24) konfiguriert ist, um ein Beleuchtungsmuster des Beleuchtungslichtes zu erzeugen;

mindestens ein Objektiv (40), das angeordnet und konfiguriert ist, um die Probe (52) zu beleuchten, indem ein Beleuchtungsmuster auf die Probe (52) projiziert wird;

ein Bildaufnahmesystem (70), das konfiguriert ist, um mindestens einen Teil des Fluoreszenzlichtes, das von der Probe (52) emittiert wird und/oder mindestens einen Teil des Beleuchtungslichtes, das von der Probe (52) reflektiert wird, zu detektieren, wodurch eine Serie von Bildern der Probe (52) an einer Vielzahl von unterschiedlichen relativen Positionen der Probe (52) in Bezug auf das Beleuchtungsmuster aufgenommen werden, das auf die Probe (52) projiziert wird, wobei zwischen der Aufnahme von mindestens zwei Bildern der Serie eine stochastische Verschiebung der relativen Position der Probe (52) in Bezug auf das Beleuchtungsmuster, das auf die Probe (52) projiziert wird, stattfindet;

ein Datenverarbeitungssystem, das konfiguriert ist, um die Serie von aufgenommenen Bildern zu verarbeiten, indem folgende Schritte durchführt werden:

anwenden einer analytischen Dekonvolution bzw. Entfaltung von jeweils einem zweiten und nachfolgenden Bilder der Serie durch ein erstes Bild der Serie zum Erhalt eines entsprechenden entfalteten Bildes;

bestimmen der Position eines Maximums (P) der analytischen Dekonvolution von jedem der entfalteten Bilder;

bestimmen der stochastischen Verschiebung der relativen Position der Probe (52) in Bezug auf das Beleuchtungsmuster, das auf die Probe (52) projiziert wird, für jedes einzelne unter den Bildern zwei und den nachfolgenden der Serie, ausgehend von der bestimmten Position des Maximums (P) der analytischen Dekonvolution;

a-posteriori verschieben eines jeden Bildes der Serie, um die bestimmte Verschiebung der relativen Position der Probe (52) in Bezug auf das projizierte Beleuchtungsmuster umzukehren, wodurch man ein entsprechendes verschobenes Bild erhält; und

verarbeiten der verschobenen Bilder, um das Bild der Probe (52) unterhalb der Auflösungsgrenze zu extrahieren.

**11.** Das Mikroskop (100) mit großem Abstand nach Anspruch 10, wobei das mindestens eine Objektiv (40) eine numerische Apertur aufweist, die geringer als 0,5 ist.

**12.** Das Mikroskop (100) mit großem Abstand nach Anspruch 10 oder 11, das des Weiteren eine musterverschiebende Komponente umfasst, die konfiguriert ist, um die relative Position der Probe (52) in Bezug auf das Beleuchtungsmuster, das auf die Probe (52) projiziert wird, stochastisch zu verschieben, und wobei die musterverschiebende Komponente konfiguriert ist, um die Probe (52) stochastisch zu verschieben und/oder um ein stochastisches Abtasten des Tisches durchzuführen, und/oder um das Fokussierlinsensystem (42, 44) des mindestens einen Mikroskopobjektivs (40) stochastisch zu bewegen.

**13.** Das Mikroskop (100) mit großem Abstand nach irgendeinem der Ansprüche 10 bis 12, wobei die Lichtquelle (10; 11; 12) konfiguriert ist, um ein stroboskopisches Beleuchtungslicht zu emittieren, das Einschalt- und Ausschalt-Zeiten aufweist, wobei die Probe (52) nur während der Einschaltzeiten beleuchtet wird, und wobei die Einschaltzeiten kürzer sind als die Ausschaltzeiten, in denen die Beleuchtung der Probe (52) unterbrochen wird.

**14.** Ein computerimplementiertes Verfahren zur Erzeugung von Bildern einer Probe (52) unterhalb der Auflösungsgrenze (*sub-resolution*) basierend auf einer Serie von Bildern der Probe (52), die durch ein Mikroskop (100) gewonnen werden, wobei
die genannte Serie von Bildern gewonnen wird durch Folgendes:

projizieren eines Beleuchtungsmusters eines Beleuchtungslichts auf die Probe (52), wodurch die Probe (52) beleuchtet wird; und
detektieren von mindestens einem Teil des Fluoreszenzlichtes, das von der Probe (52) emittiert wird, und/oder detektieren von mindestens einem Teil des Beleuchtungslichtes, das von der Probe (52) reflektiert wird, wodurch eine Serie von Bildern der Probe (52) an einer Vielzahl von unterschiedlichen relativen Positionen der Probe (52) in Bezug auf das Beleuchtungsmuster aufgenommen werden, das auf die Probe (52) projiziert wird, wobei zwischen der Aufnahme von mindestens zwei Bildern der Serie die relative Position der Probe (52) in Bezug auf das Beleuchtungsmuster, das auf die Probe (52) projiziert wird, stochastisch verschoben wird; und wobei das genannte Verfahren die folgenden Schritte umfasst:

empfangen der genannten Serie von Bildern der Probe (52);
anwenden einer analytischen Dekonvolution bzw. Entfaltung von jedem aus dem zweiten und den nachfolgenden Bilder der Serie durch ein erstes Bild der Serie zum Erhalt eines entsprechenden entfalteten Bildes;
bestimmen der Position eines Maximums (P) der analytischen Dekonvolution von jedem der entfalteten Bilder;
bestimmen der stochastischen Verschiebung der relativen Position der Probe (52) in Bezug auf das Beleuchtungsmuster, das auf die Probe (52) projiziert wird, für jedes einzelne unter den Bildern zwei und den nachfolgenden der Serie, ausgehend von der bestimmten Position des Maximums (P) der analytischen Dekonvolution;
a-posteriori verschieben eines jeden empfangenen Bildes, um die bestimmte Verschiebung der relativen Position der Probe (52) in Bezug auf das projizierte Beleuchtungsmuster umzukehren, wodurch man ein entsprechendes verschobenes Bild erhält; und
verarbeiten der verschobenen Bilder, um ein Bild unterhalb der Auflösungsgrenze zu extrahieren.

**15.** Ein Computerprogrammprodukt, das, wenn es in den Speicher eines Computers geladen wird und durch den Computer ausgeführt wird, ein computerimplementiertes Verfahren nach Anspruch 14 durchführt.

**Revendications**

**1.** Un procédé pour obtenir une image en infra-résolution d'un échantillon (52) en utilisant un microscope (100), le procédé comprenant le fait de :

projeter un motif d'éclairage de lumière d'éclairage sur l'échantillon (52), ce qui permet d'éclairer l'échantillon (52) ;
détecter au moins une partie de la lumière fluorescente émise par l'échantillon (52) et/ou détecter au moins une partie de la lumière d'éclairage réfléchie par l'échantillon (52), ce qui permet de saisir une série d'images de l'échantillon (52) dans une pluralité de différentes positions relatives de l'échantillon (52) par rapport au motif d'éclairage projeté sur l'échantillon (52), sachant qu'entre la saisie d'au moins deux images de la série, la position relative de l'échantillon (52) par rapport au motif d'éclairage projeté sur l'échantillon (52) est décalée de manière stochastique ;

traiter les images saisies pour extraire une image en infra-résolution de l'échantillon (52), sachant que le fait de traiter les images saisies comprend le fait de :

appliquer une déconvolution analytique de chacune parmi une deuxième image et des images suivantes de la série par une première image de la série pour obtenir une image déconvoluée correspondante ;

déterminer la position d'un maximum (P) de la déconvolution analytique de chacune des images déconvoluées ;

déterminer le décalage stochastique de la position relative de l'échantillon (52) par rapport au motif d'éclairage projeté sur l'échantillon (52) pour chacune parmi la deuxième image et les images suivantes de la série à partir de la position déterminée du maximum (P) de la déconvolution analytique ;

décaler a posteriori chaque image de la série pour renverser le décalage déterminé de la position relative de l'échantillon (52) par rapport au motif d'éclairage projeté, ce qui permet d'obtenir une image décalée correspondante ; et

traiter les images décalées pour extraire l'image en infra-résolution de l'échantillon (52).

2. Le procédé d'après la revendication 1, sachant que la position relative de l'échantillon (52) par rapport au motif d'éclairage est décalée de manière stochastique grâce à des mouvements stochastiques de l'échantillon (52) et/ou en décalant l'échantillon (52) de manière stochastique, et/ou par un balayage stochastique de platine, et/ou par des mouvements stochastiques d'un système de lentilles de focalisation (42, 44) d'un objectif de microscope (40).

3. Le procédé d'après la revendication 1 ou 2, sachant que le fait de déterminer le décalage stochastique de la position relative de l'échantillon (52) par rapport au motif d'éclairage projeté sur l'échantillon (52) comprend le fait de :

effectuer une transformation de fourier de chacune des images de la série ;

diviser chacune parmi les images deux et suivantes soumises à une transformée de Fourier par la première image soumise à une transformée de Fourier pour obtenir une image divisée correspondante ;

effectuer une transformation de fourier inverse de chacune des images divisées ;

déterminer la position d'un maximum (P) d'intensité de chacune des images divisées soumises à une transformée de fourier inverse ;

déterminer le décalage stochastique de la position relative de l'échantillon (52) par rapport au motif d'éclairage projeté sur l'échantillon (52) de chacune parmi la deuxième et les images suivantes de la série à partir de la position déterminée du maximum (P) d'intensité de l'image divisée soumise à une transformée de Fourier inverse.

4. Le procédé d'après une quelconque des revendications précédentes, sachant que le motif d'éclairage est projeté sur l'échantillon (52) à travers au moins un objectif (40) du microscope (100) présentant une ouverture numérique de moins de 0,5.

5. Le procédé d'après une quelconque des revendications précédentes, sachant que l'échantillon (52) est éclairé uniquement lors de la saisie des images.

6. Le procédé d'après la revendication 5, sachant que les durées de marche, pendant lesquelles l'échantillon (52) est éclairé, sont plus courtes que les durées d'arrêt, pendant lesquelles l'éclairage de l'échantillon (52) est interrompu.

7. Le procédé d'après une quelconque des revendications précédentes, comprenant en outre les étapes suivantes consistant à :

tourner l'échantillon (52) par rapport à un axe perpendiculaire à l'axe optique du microscope (100) jusqu'à une pluralité d'angles de rotation ;

à chaque angle de rotation, obtenir un ensemble d'images incluant une pluralité d'images saisies dans une pluralité de différentes positions relatives de l'échantillon (52) par rapport au motif d'éclairage projeté sur l'échantillon (52) ;

générer une image tridimensionnelle basée sur les ensembles d'images obtenus dans la pluralité d'angles de rotation.

8. Le procédé d'après une quelconque des revendications précédentes, comprenant en outre les étapes suivantes consistant à :

focaliser le motif d'éclairage de lumière d'éclairage dans une pluralité de différents plans focaux ;

pour chaque plan focal, obtenir un ensemble d'images incluant une pluralité d'images saisies dans une pluralité de différentes positions relatives de l'échantillon (52) par rapport au motif d'éclairage projeté sur l'échantillon (52) ;

générer une image tridimensionnelle basée sur les ensembles d'images obtenus dans la pluralité de différents plans focaux.

9. Le procédé d'après une quelconque des revendications précédentes, comprenant en outre une étape consistant à trier (*sort-out*) une ou plusieurs des images saisies, sachant qu'une image particulière est triée s'il a été déterminé que la variation stochastique de la position relative de l'échantillon (52) par rapport au motif d'éclairage projeté sur l'échantillon (52) pendant la saisie de l'image dépasse un seuil prédéterminé.

10. Un microscope (100) à grande longueur pour effectuer des observations d'un échantillon (52) à éclairage par fluorescence et/ou par réflexion, le microscope (100) comprenant :

une source de lumière (10 ; 11 ; 12) qui émet de la lumière d'éclairage ;

un système de génération de motif (20 ; 22 ; 24) agencé dans le chemin optique de la lumière d'éclairage, ledit système de génération de motif (20 ; 22 ; 24) étant configuré pour générer un motif d'éclairage de lumière d'éclairage ;

au moins un objectif (40) agencé et configuré pour éclairer l'échantillon (52) en projetant le motif d'éclairage sur l'échantillon (52) ;

un système de saisie d'image (70) configuré pour détecter au moins une partie de la lumière fluorescente émise par l'échantillon (52) et/ou détecter au moins une partie de la lumière d'éclairage réfléchie par l'échantillon (52), ce qui permet de saisir une série d'images de l'échantillon (52) dans une pluralité de différentes positions relatives de l'échantillon (52) par rapport au motif d'éclairage projeté sur l'échantillon (52), sachant qu'entre la saisie d'au moins deux images de la série, il y a un décalage stochastique de la position relative de l'échantillon (52) par rapport au motif d'éclairage projeté sur l'échantillon (52) ;

un système de traitement de données configuré pour traiter la série d'images saisies en effectuant les étapes suivantes consistant à :

appliquer une déconvolution analytique de chacune parmi une deuxième image et des images suivantes de la série par une première image de la série pour obtenir une image déconvoluée correspondante ;

déterminer la position d'un maximum (P) de la déconvolution analytique de chacune des images déconvoluées ;

déterminer le décalage stochastique de la position relative de l'échantillon (52) par rapport au motif d'éclairage projeté sur l'échantillon (52) pour chacune parmi la deuxième image et les images suivantes de la série à partir de la position déterminée du maximum (P) de la déconvolution analytique ;

décaler a posteriori chaque image de la série pour renverser le décalage déterminé de la position relative de l'échantillon (52) par rapport au motif d'éclairage, ce qui permet d'obtenir une image décalée correspondante ; et

traiter les images décalées pour extraire l'image en infra-résolution de l'échantillon (52).

11. Le microscope (100) à grande longueur d'après la revendication 10, sachant que le ou les objectifs (40) présentent une ouverture numérique de moins de 0,5.

12. Le microscope (100) à grande longueur d'après la revendication 10 ou 11, comprenant en outre un composant de décalage de motif configuré pour décaler de manière stochastique la position relative de l'échantillon (52) par rapport au motif d'éclairage projeté sur l'échantillon (52), et sachant que le composant de décalage de motif est configuré pour décaler de manière stochastique l'échantillon (52), et/ou pour effectuer un balayage stochastique de platine, et/ou pour déplacer de manière stochastique le système de lentilles de focalisation (42, 44) du ou des objectifs de microscope (40).

13. Le microscope (100) à grande longueur d'après une des revendications de 10 à 12, sachant que la source de lumière (10 ; 11 ; 12) est configurée pour émettre une lumière d'éclairage stroboscopique présentant des temps de marche et des temps d'arrêt, sachant que l'échantillon (52) est éclairé uniquement pendant les temps de marche, et sachant que les temps de marche sont respectivement plus courts que les temps d'arrêt, pendant lesquels l'éclairage de l'échantillon (52) est interrompu.

**14.** Un procédé mis en oeuvre par ordinateur pour générer des images en infra-résolution d'un échantillon (52) en se basant sur une série d'images de l'échantillon (52) obtenue par un microscope (100), sachant que ladite série d'images est obtenue far le fait de :

projeter un motif d'éclairage de lumière d'éclairage sur l'échantillon (52), ce qui permet d'éclairer l'échantillon (52) ; et

détecter au moins une partie de la lumière fluorescente émise par l'échantillon (52) et/ou détecter au moins une partie de la lumière d'éclairage réfléchie par l'échantillon (52), ce qui permet de saisir une série d'images dans une pluralité de différentes positions relatives de l'échantillon (52) par rapport au motif d'éclairage projeté sur l'échantillon (52), sachant qu'entre la saisie d'au moins deux images de la série, la position relative de l'échantillon (52) par rapport au motif d'éclairage projeté sur l'échantillon (52) est décalée de manière stochastique ; et sachant que ledit procédé comprend les étapes suivantes consistant à :

recevoir ladite série d'images de l'échantillon (52) ;

appliquer une déconvolution analytique de chacune parmi une deuxième image et des images suivantes de la série par une première image de la série pour obtenir une image déconvoluée correspondante ;

déterminer la position d'un maximum (P) de la déconvolution analytique de chacune des images déconvoluées ;

déterminer le décalage stochastique de la position relative de l'échantillon (52) par rapport au motif d'éclairage projeté sur l'échantillon (52) pour chacune parmi la deuxième image et les images suivantes de la série à partir de la position déterminée du maximum (P) de la déconvolution analytique ;

décaler a posteriori chaque image reçue pour renverser le décalage correspondant de la position relative de l'échantillon (52) par rapport au motif d'éclairage projeté, ce qui permet d'obtenir une image décalée correspondante ; et

traiter les images décalées pour extraire une image en infra-résolution.

**15.** Un produit programme informatique, lequel, quand il est chargé dans la mémoire d'un ordinateur et qu'il est exécuté par l'ordinateur, effectue un procédé mis en oeuvre par ordinateur d'après la revendication 14.

Fig. 1A

excitation light
emission light

Fig. 1B

Fig. 2

# Fig. 3

## Fig. 3a

conventional

## Fig. 3b

SMI

EP 2 713 195 B1

## Fig. 4

# Fig. 5

Fig. 6

a) unshifted object $p_0(x)$
b) shifted object $p_1(x)$
c) illumination pattern $I_{illu}(x)$
d) Image of illuminated unshifted object $Im_0(x)$
e) Image of illuminated shifted object $Im_1(x)$
f) peak in R(x)

zero frequency
shift vector $\Delta x$
peak P

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008124832 A1

**Non-patent literature cited in the description**

- Laterally modulated excitation microscopy: Improvement of resolution by using a diffraction grating. **R. HEINTZMANN et al.** proceedings of SPIE. 1999, vol. 3568, 185

- **G. BEST et al.** Structured illumination microscopy of autofluorescent aggregations in human tissue. *Micron,* 2010
- **HEINTZMANN ; CREMER.** Axial tomographic confocal fluorescence microscopy. *Journal of Microscopy,* 2002, vol. 206 (1), 7-23